# EUROPEAN PATENT SPECIFICATION

(11) **EP 4 226 738 B1**
(45) Date of publication and mention of the grant of the patent: **02.12.2026**
(21) Application number: 21789688.5
(22) Date of filing: 07.10.2021
(51) Int. Cl.: H04W 76/19, H04W 76/30, H04W 36/30, H04W 88/02, H04W 88/04, H04W 88/08, H04W 36/00

(54) **HANDLING RADIO LINK FAILURE IN RELAYED RADIO COMMUNICATIONS**
HANDHABUNG VON FUNKVERBINDUNGSFEHLERN IN WEITERGELEITETEN FUNKKOMMUNIKATIONEN
GÉRER UNE DÉFAILLANCE DE LIAISON RADIO DANS DES COMMUNICATIONS RADIO RELAYÉES

(30) Priority: 07.10.2020 US 202063088645 P
(43) Date of publication of application: 16.08.2023
(73) Proprietor: Telefonaktiebolaget LM Ericsson (publ), 164 83 Stockholm (SE)
(72) Inventor: ORSINO, Antonino, 02480 Kirkkonummi (FI); WANG, Min, 977 53 LULEÅ (SE)
(74) Representative: Ericsson
(86) International application number: PCT/EP2021/077698
(87) International publication number: WO 2022/074121

(56) References cited:
- EP-A1- 3 481 106
- WO-A1-2020/059470

## Description

### Technical Field

The present disclosure relates to a technique for handling a radio link failure (RLF) in a relayed radio communication. More specifically, and without limitation, methods and devices are provided for handling an RLF in a relayed radio communication at a relay radio device between a remote radio device and a radio access network (RAN) or a further remote radio device.

### Background

The Third Generation Partnership Project (3GPP) and the Wi-Fi Alliance specify radio access technologies such as Fourth Generation Long Term Evolution (4G LTE), Fifth Generation New Radio (5G NR) and Wi-Fi, each of which supports device-to-device (D2D) communications. For example, 3GPP has specified a sidelink (SL) for LTE and NR. The SL is also referred to as a proximity service (or PROximity-based Service, ProSe).

The D2D communication may be used to relay a data unit to or from a remote radio device (e.g., a remote UE or RM-UE), e.g., in case a relay radio device (e.g., a relay UE or RL-UE) has coverage to a 3GPP network node such as a gNB, while the remote radio device is out of coverage.

In 3GPP meeting RAN2#111-e, a layer 2 (L2) relay mechanism was discussed. The L2 relay mechanism comprises an adaptation layer. For example, as has been summarized in the 3GPP document R2-2008266 "Summary of [AT111-e][605][Relay] L2 Relay Mechanism" by MediaTek Inc. for RAN2#111-e, it has been agreed to support an adaptation layer for relaying the relayed radio communication.

However, the state of the art does not guarantee or control service continuity in case of a RLF in sidelink relay scenarios. For example, since in the relay radio communication, that is in a relay path, more than two entities are involved such as the remote UE, the relay UE, and the gNB or the further remote UE, each of them has to be in consistent states and/or perform consistent actions once the RLF has been detected.

WO2020059470 A1 discloses a method of reestablishing a connection based on a Radio Link Failure (RLF) in a Wireless Relay Network using alternative routes, the wireless relay network having a donor node, a first node (IAB-node A), a second node (IAB-node B), a third node (IAB-node X), and a fourth node (IAB-node C), wherein the donor node is an Integrated Access and Backhaul (IAB) node connected to a core network, and wherein the first node, the second node, the third node, and the fourth node each have Mobile Termination (MT) functionality capabilities.

EP3 481 106 A1 discloses a method the realize handover in relay communication using a relay terminal, wherein a remote terminal is configured to acquire information regarding a communication quality of one or more radio links including at least one of a direct first radio link or a second radio link via a relay terminal between a remote terminal and a base station, and to switch the radio link to be used in communication between the remote terminal and the base station on the basis of the acquired information regarding the communication quality.

### Summary

Accordingly, there is a need for a technique that handles a RLF in relayed radio communications using at least one sidelink. Particularly, there is a need for a technique that enables consistent action and/or states by the entities involved in the relayed radio communication with minimal signaling overhead.

It is the object of the invention to overcome exemplary problems described above.

This object is achieved by the independent claims. Advantageous embodiments are described in the dependent claims and by the following description. The invention is carried out according to the appended independent claims. Optional features of the invention are carried out according to the dependent claims.

### Brief Description of the Drawings

Further details of embodiments of the technique are described with reference to the enclosed drawings, wherein:
- Fig. 1A: shows an example schematic block diagram of a relay radio device embodiment of device for handling an RLF in a relayed radio communication;
- Fig. 1B: shows an example schematic block diagram of a network node embodiment of device for handling an RLF in a relayed radio communication;
- Fig. 2A: shows an example flowchart for a method of handling an RLF in a relayed radio communication, which method may be implementable by the device of Fig. 1A;
- Fig. 2B: shows an example flowchart for a method of handling an RLF in a relayed radio communication, which method may be implementable by the device of Fig. 1B;
- Fig. 3: shows an example deployment scenario for a relayed radio communication;
- Fig. 4: schematically shows a physical resource grid of a 3GPP NR implementation;
- Fig. 5: schematically illustrates an architecture of a relayed radio communication using a RL device, e.g. as the device of Fig. 1;
- Fig. 6: schematically illustrates examples of protocol stacks for a L3 remote radio device-to-network relay;
- Fig. 7: schematically illustrates an example of a RM radio device to network relay;
- Fig. 8: schematically illustrates a user plane stack for an L2 RL radio device, the RAN and/or a further radio device and an RM radio device embodying the devices of Fig. 1A and 1B, respectively;
- Fig. 9: schematically illustrates a control plane stack for an L2 RL radio device, the RAN and/or a further radio device and an RM radio device embodying the devices of Fig. 1A and 1B, respectively;
- Fig. 10: schematically illustrates a connection establishment for a relayed radio connection for an RL radio device, the RAN and/or a further radio device and an RM radio device embodying the devices of Fig. 1A and 1B, respectively;
- Fig. 11: schematically illustrates an example of a relayed radio communication, for which an RLF is detected, involving embodiments of the devices of any one of Figs. 1A and 1B;
- Fig. 12: schematically illustrates a further example of a relayed radio communication, for which an RLF is detected, involving embodiments of the devices of any one of Figs. 1A and 1B;
- Fig. 13A: shows an example schematic block diagram of a RL radio device embodying the device of Fig. 1A;
- Fig. 13B: shows an example schematic block diagram of a network node embodying the device of Fig. 1B;
- Fig. 14: schematically illustrates an example telecommunication network connected via an intermediate network to a host computer;
- Fig. 15: shows a generalized block diagram of a host computer communicating via a base station or radio device functioning as a gateway with a user equipment over a partially wireless connection; and
- Figs. 16 and 17: show flowcharts for methods implemented in a communication system including a host computer, a base station or radio device functioning as a gateway and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including 3GPP LTE (e.g., LTE-Advanced or a related radio access technique such as MulteFire), in a Wireless Local Area Network (WLAN) according to the standard family IEEE 802.11, for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

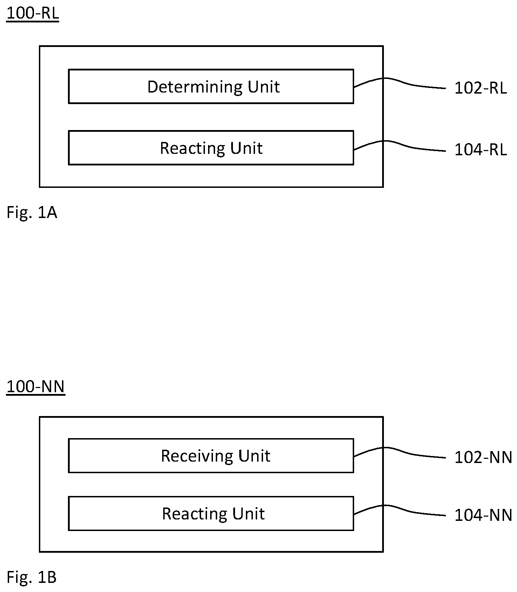

Fig. 1A schematically illustrates an example block diagram of a device according to the first device aspect, i.e., a device for handling an RLF in a relayed radio communication relayed through a relay radio device between a remote radio device and a RAN or a further remote radio device. The device is generically referred to by reference sign 100-RL.

The device 100-RL may comprise any one of the units 102-RL and 104-RL for performing the steps labelled 202-RL and 204-RL, respectively, preferably according to the list of claims or any embodiment disclosed herein.

The device 100-RL may comprise a unit 102-RL that determines an RLF in the relayed radio communication. The device 100-RL may further comprise a unit 104-RL that performs or initiates, responsive to the determined RLF, at least one of a release, a reconfiguration, and a reestablishment of the relayed radio communication.

Any of the units of the device 100-RL may be implemented by modules configured to provide the corresponding functionality.

The device 100-RL may also be referred to as, or may be embodied by, the relay radio device (i.e., RL radio device, e.g., RL-UE or labelled 100-RL). The device 100-RL and the remote radio device as well as device 100-RL and the RAN (e.g. a network node of the RAN) or the further remote radio device are in a radio communication (preferably D2D communication or Uu) at least for relaying the relayed radio communication.

The remote radio device (i.e., RM radio device) may be a RM-UE (labelled 100-RM). The network node may be labelled 100-NN.

Fig. 1B schematically illustrates an example block diagram of a device according to the second device aspect, i.e. a device for handling an RLF in a relayed radio communication relayed through a relay radio device between a remote radio device and a RAN or a further remote radio device. The device is generically referred to by reference sign 100-NN.

The device 100-NN may comprise any one of the units 102-NN and 104-NN for performing the steps labelled 202-NN and 204-NN, respectively, preferably according to the list of claims or any embodiment disclosed herein.

The device 100-NN may comprise a unit 102-NN that receives a report indicative of an RLF in the relayed radio communication. The device 100-NN may further comprise a unit 104-NN that performs or initiates, responsive to the report, at least one of a release, a reconfiguration, and a reestablishment of the relayed radio communication

Any of the units of the device 100-NN may be implemented by modules configured to provide the corresponding functionality.

The device 100-NN may also be referred to as, or may be embodied by or may be comprised in the RAN, e.g., the network node labelled 100-NN. The device 100-NN and the relay radio device 100-RL are in a radio communication (preferably via the radio interface Uu) at least for relaying the relayed radio communication.

The technique may be applied to uplink (UL), downlink (DL) or direct communications between radio devices, e.g., device-to-device (D2D) communications or sidelink communications.

Each of the device 100-RL, the device 100-NN, and the device 100-RM may be a radio device and/or a network node (e.g., a base station). Herein, any radio device may be a mobile or portable station and/or any radio device wirelessly connectable to the network node (e.g., a base station) and/or the RAN, or to another radio device. A radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP sidelink connection. Furthermore, any base station may be a station providing radio access, may be part of a radio access network (RAN) and/or may be a node connected to the RAN for controlling radio access. Further a base station may be an access point, for example a Wi-Fi access point.

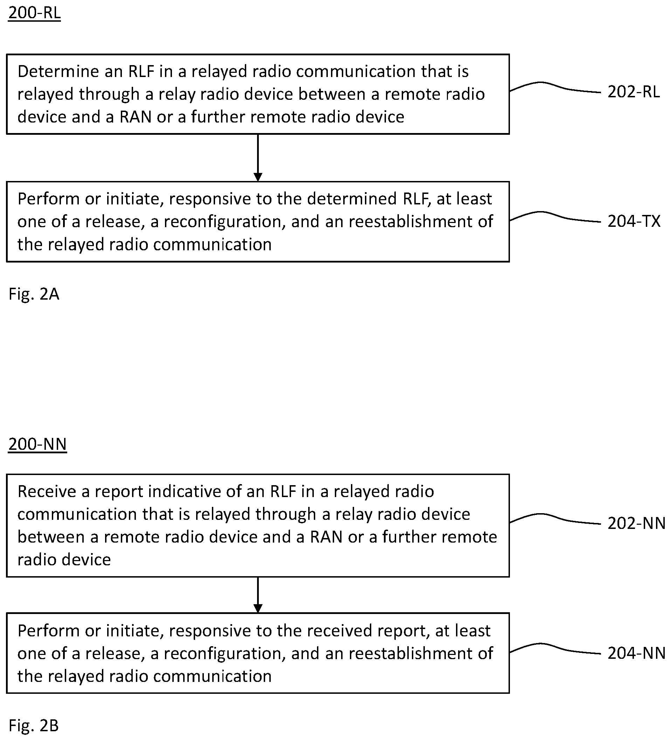

Fig. 2A shows an example flowchart for a method 200-RL according to the first method aspect in the list of claims.

The method 200-RL may be performed by the device 100-RL or 100-TX. For example, the units 102-RL and 104-RL may perform the steps 202-RL and 204-RL, respectively.

Fig. 2B shows an example flowchart for a method 200-NN according to the second method aspect in the list of claims.

The method 200-NN may be performed by the device 100-NN or 100-RX. For example, the units 102-NN and 104-NN may perform the steps 202-NN and 204-NN, respectively.

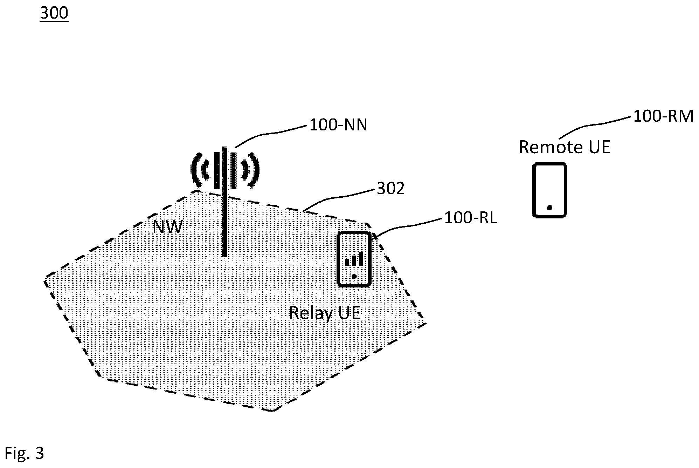

Fig. 3 shows an example deployment scenario for a relayed radio communication 300. The deployment scenario comprises a network node 100-NN of a RAN with coverage area 302. A RL radio device 100-RL is in the coverage area 302 of the network node 100-NN. A RM radio device 100-RM is outside of the coverage area 302 of the network node 100-NN, but in proximity to the RL radio deice 100-RL. By being in the proximity, the RM radio device 100-RM and the RL radio device 100-RL may be in a D2D communication.

Any embodiment may be implemented using a frame structure for the relayed radio communication and/or the D2D communication, e.g., according to 3GPP NR.

Similar to LTE, NR uses OFDM (Orthogonal Frequency Division Multiplexing) in the DL (e.g., from a network node, gNB, eNB, or base station, to a user equipment or UE).

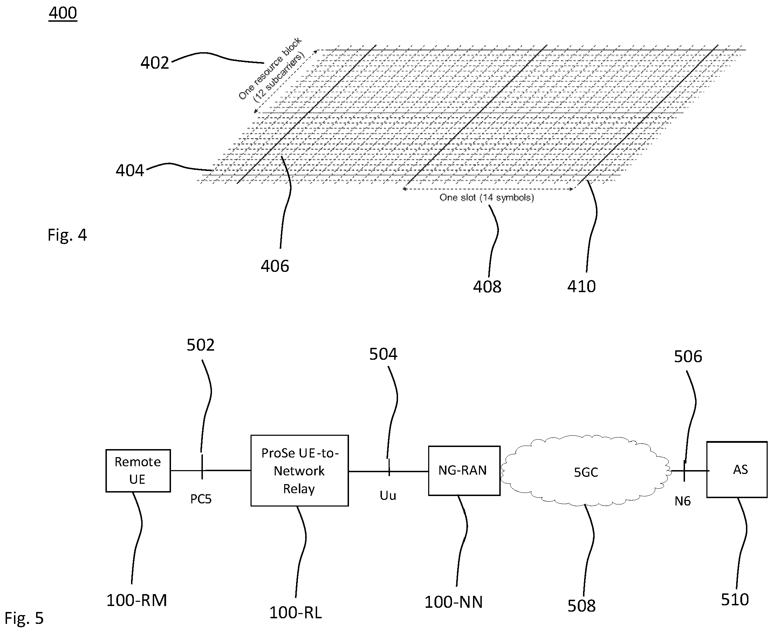

Fig. 4 schematically illustrates a physical resource grid 400 for a 3GPP NR implementation of the technique.

The basic NR physical resource over an antenna port can be seen as a time-frequency grid as illustrated in Fig. 4, where a resource block (RB) 402 in a 14-symbol slot 408 is shown. A RB 402 corresponds to 12 contiguous subcarriers 404 in the frequency domain. RBs 402 are numbered in the frequency domain, starting with 0 from one end of the system bandwidth. Each resource element (RE) 406 corresponds to one OFDM subcarrier during one OFDM symbol 410 interval. A slot 408 comprises 14 OFDM symbols 410.

Different subcarrier spacing values are supported in NR. The supported subcarrier spacing values (also referred to as different numerologies) are given by Δf=(15×2^µ) kHz where µ E (0,1,2,3,4). Δf=15 kHz is the basic (or reference) subcarrier spacing that is also used in LTE.

In the time domain, DL and UL transmissions in NR are organized into equally-sized subframes of 1ms each similar to LTE. A subframe is further divided into multiple slots 408 of equal duration. The slot length for subcarrier spacing Δf=(15×2^µ) kHz is (1/2)^µ ms. There is only one slot 408 per subframe for Δf = 15 kHz, and a slot 408 consists of 14 OFDM symbols 410.

DL transmissions are dynamically scheduled, e.g., in each slot the gNB transmits DL control information (DCI) about which radio device (e.g., UE) data is to be transmitted to and which RBs in the current DL slot the data is transmitted on. This control information is conventionally transmitted in the first one or two OFDM symbols in each slot in NR. The control information is carried on the Physical Control Channel (PDCCH), and data is carried on the Physical Downlink Shared Channel (PDSCH). A radio device (e.g., a UE) first detects and decodes PDCCH and, if a PDCCH is decoded successfully, it (e.g., the UE) then decodes the corresponding PDSCH based on the DL assignment provided by decoded control information in the PDCCH.

In addition to PDCCH and PDSCH, there are also other channels and reference signals transmitted in the downlink, including synchronization signal blocks (SSBs), channel state information reference signals (CSI-RS), etc.

UL data transmissions, carried on Physical Uplink Shared Channel (PUSCH), can also be dynamically scheduled by the gNB by transmitting a DCI. The DCI (which is transmitted in the DL region) indicates a scheduling time offset so that the PUSCH is transmitted in a slot in the UL region.

Any embodiment may be implemented using a sidelink (SL) in NR for the D2D communication.

SL transmissions over NR are specified for Rel. 16. These are enhancements of the ProSe (PROximity-based SErvices) specified for LTE. Four new enhancements are particularly introduced to NR sidelink transmissions as follows:
- Support for unicast and groupcast transmissions are added in NR SL. For unicast and groupcast, the physical sidelink feedback channel (PSFCH) is introduced for a receiver radio device (e.g., a receiver UE) to reply the decoding status to a transmitter radio device (e.g., a transmitter UE).
- Grant-free transmissions, which are adopted in NR UL transmissions, are also provided in NR SL transmissions, to improve the latency performance.
- To alleviate resource collisions among different SL transmissions launched by different radio devices (e.g., different UEs), it enhances channel sensing and resource selection procedures, which also lead to a new design of PSCCH.
- To achieve a high connection density, congestion control and thus the quality of service (QoS) management is supported in NR SL transmissions.

To enable the above enhancements, new physical channels and reference signals (RSs) are introduced in NR (available in LTE before.):
- PSSCH (Physical Sidelink Shared Channel, SL version of PDSCH): The PSSCH is transmitted by a SL transmitter radio device (e.g., SL transmitter UE), which conveys SL transmission data, system information blocks (SIBs) for radio resource control (RRC) configuration, and a part of the sidelink control information (SCI).
- PSFCH (Physical Sidelink, SL version of PUCCH): The PSFCH is transmitted by a SL receiver radio device (e.g., a SL receiver UE) for unicast and groupcast, which conveys 1 bit information over 1 RB for the HARQ acknowledgement (ACK) and the negative ACK (NACK). In addition, channel state information (CSI) is carried in the medium access control (MAC) control element (CE) over the PSSCH instead of the PSFCH.
- PSCCH (Physical Sidelink Common Control Channel, SL version of PDCCH): When the traffic to be sent to a receiver radio device (e.g., a receiver UE) arrives at a transmitter radio device (e.g., a transmitter UE), a transmitter radio device (e.g., transmitter UE) should first send the PSCCH, which conveys a part of SCI (Sidelink Control information, SL version of DCI) to be decoded by any radio device (e.g., UE) for the channel sensing purpose, including the reserved time-frequency resources for transmissions, demodulation reference signal (DMRS) pattern and antenna port, etc.
- Sidelink Primary/Secondary Synchronization Signal (S-PSS/S-SSS): Similar DL transmissions in NR, in SL transmissions, primary and secondary synchronization signals (called S-PSS and S-SSS, respectively) are supported. Through detecting the S-PSS and S-SSS, a radio device (e.g., a UE) is able to identify the SL synchronization identity (SSID) from the radio device (e.g., UE) sending the S-PSS/S-SSS. Through detecting the S-PSS/S-SSS, a radio device (e.g., UE) is therefore able to know the characteristics of the radio device (e.g., UE) transmitting the S-PSS/S-SSS. A series of processes of acquiring timing and frequency synchronization together with SSIDs of radio devices (e.g., UEs) is called initial cell search. Note that the radio device (e.g., UE) sending the S-PSS/S-SSS may not be necessarily involved in SL transmissions, and a node (e.g., a UE and/or eNB and/or gNB) sending the S-PSS/S-SSS is called a synchronization source. There are 2 S-PSS sequences and 336 S-SSS sequences forming a total of 672 SSIDs in a cell.
- Physical Sidelink Broadcast Channel (PSBCH): The PSBCH is transmitted along with the S-PSS/S-SSS as a synchronization signal/PSBCH block (SSB). The SSB has the same numerology as PSCCH/PSSCH on that carrier, and an SSB should be transmitted within the bandwidth of the configured BWP. The PSBCH conveys information related to synchronization, such as the direct frame number (DFN), indication of the slot and symbol level time resources for sidelink transmissions, in-coverage indicator, etc. The SSB is transmitted periodically at every 160 ms.
- DMRS, phase tracking reference signal (PT-RS), channel state information reference signal (CSI-RS): These physical reference signals supported by NR DL/UL transmissions are also adopted by SL transmissions. Similarly, the PT-RS is only applicable for FR2 transmission.

Another new feature is the two-stage SL control information (SCI). This a version of the DCI for SL. Unlike the DCI, only part (first stage) of the SCI is sent on the PSCCH. This part is used for channel sensing purposes (including the reserved time-frequency resources for transmissions, demodulation reference signal (DMRS) pattern and antenna port, etc.) and can be read by all radio devices (e.g., UEs) while the remaining (second stage) scheduling and control information such as a 8-bits source identity (ID) and a 16-bits destination ID, NDI, RV and HARQ process ID is sent on the PSSCH to be decoded by the receiver radio device (e.g., UE).

Similar as for PRoSE in LTE, NR SL transmissions have the following two modes of resource allocations:
- Mode 1: SL resources are scheduled by a network node (e.g., gNB).
- Mode 2: The radio device (e.g., UE) autonomously selects SL resources from a configured or preconfigured SL resource pool(s) based on the channel sensing mechanism.

For the in-coverage radio device (e.g., UE), a network node (e.g., gNB) can be configured to adopt Mode 1 or Mode 2. For the out-of-coverage radio device (e.g., UE), only Mode 2 can be adopted.

As in LTE, scheduling over the SL in NR is done in different ways for Mode 1 and Mode 2.

Mode 1 supports the following two kinds of grants, namely dynamic grants and configured grants.

Dynamic grant: When the traffic to be sent over SL arrives at a transmitter radio device (e.g., UE), this radio device (e.g., UE) should launch the four-message exchange procedure to request SL resources from a network node, e.g. gNB (SR on UL, grant, BSR on UL, grant for data on SL sent to the radio device, e.g., UE). During the resource request procedure, a network node (e.g., gNB) may allocate a SL radio network temporary identifier (SL-RNTI) to the transmitter radio device (e.g., UE). If this SL resource request is granted by a network node (e.g., gNB), then a network node (e.g., gNB) indicates the resource allocation for the PSCCH and the PSSCH in the downlink control information (DCI) conveyed by PDCCH with cyclic redundancy check (CRC) scrambled with the SL-RNTI. When a transmitter radio device (e.g., UE) receives such a DCI, a transmitter radio device (e.g., UE) can obtain the grant only if the scrambled CRC of DCI can be successfully solved by the assigned SL-RNTI. A transmitter radio device (e.g., UE) then indicates the time-frequency resources and the transmission scheme of the allocated PSSCH in the PSCCH, and launches the PSCCH and the PSSCH on the allocated resources for SL transmissions. When a grant is obtained from a network node (e.g., gNB), a transmitter radio device (e.g., UE) can only transmit a single transport block (TB). As a result, this kind of grant is suitable for traffic with a loose latency requirement.

Configured grant: For the traffic with a strict latency requirement, performing the four-message exchange procedure to request SL resources may induce unacceptable latency. In this case, prior to the traffic arrival, a transmitter radio device (e.g., UE) may perform the four-message exchange procedure and request a set of resources. If a grant can be obtained from a network node (e.g., gNB), then the requested resources are reserved in a periodic manner. Upon traffic arriving at a transmitter radio device (e.g., UE), this radio device (e.g., UE) can launch the PSCCH and the PSSCH on the upcoming resource occasion. This kind of grant is also known as grant-free transmissions.

In both dynamic grant and configured grant, a SL receiver radio device (e.g., UE) cannot receive the DCI since it is addressed to the transmitter radio device (e.g., UE), and therefore a receiver radio device (e.g., UE) should perform blind decoding to identify the presence of PSCCH and find the resources for the PSSCH through the SCI.

When a transmitter radio device (e.g., UE) launches the PSCCH, CRC is also inserted in the SCI without any scrambling.

In the Mode 2 resource allocation, when traffic arrives at a transmitter radio device (e.g., UE), this transmitter radio device (e.g., UE) should autonomously select resources for the PSCCH and the PSSCH. To further minimize the latency of the feedback HARQ ACK/NACK transmissions and subsequently retransmissions, a transmitter radio device (e.g., UE) may also reserve resources for PSCCH/PSSCH for retransmissions. To further enhance the probability of successful TB decoding at one shot and thus suppress the probability to perform retransmissions, a transmitter radio device (e.g., UE) may repeat the TB transmission along with the initial TB transmission. This mechanism is also known as blind retransmission. As a result, when traffic arrives at a transmitter radio device (e.g., UE), then this transmitter radio device (e.g., UE) should select resources for the following transmissions:
1) The PSSCH associated with the PSCCH for initial transmission and blind retransmissions.
2) The PSSCH associated with the PSCCH for retransmissions.

Since each transmitter radio device (e.g., UE) in SL transmissions should autonomously select resources for above transmissions, how to prevent different transmitter radio devices (e.g., UEs) from selecting the same resources turns out to be a critical issue in Mode 2. A particular resource selection procedure is therefore imposed to Mode 2 based on channel sensing. The channel sensing algorithm involves measuring reference signal received power (RSRP) on different subchannels and requires knowledge of the different radio devices (e.g., UEs) power levels of DMRS on the PSSCH or the DMRS on the PSCCH depending on the configuration. This information is known only after receiver SCI launched by (all) other radio devices (e.g., UEs). The sensing and selection algorithm is rather complex.

The D2D communication may be based on or initiated by a discovery procedure.

There are D2D discovery procedures for detection of services and applications offered by other radio devices (e.g., UEs) in close proximity. This is part of LTE Release 12 and Release 13. The discovery procedure has two modes, mode A based on open announcements (broadcasts) and mode B, which is request/response. The discovery mechanism is controlled by the application layer (ProSe). The discovery message is sent on the Physical Sidelink Discovery Channel (PSDCH) which is not available in NR. Also, there is a specific resource pool for announcement and monitoring of discovery messages. The discovery procedure can be used to detect radio devices (e.g., UEs) supporting certain services or applications before initiating direct communication.

The relayed radio communication through the relay radio device, e.g. device 100-RL, may be implemented as a Layer 3 (L3) UE-to-Network relay.

In the 3GPP document TR 23.752, version 0.3.0, clause 6.6, the layer-3 based UE-to-Network relay is described as further discussed in connection to Fig. 5.

As shown in Fig. 5, the ProSe 5G UE-to-Network Relay entity 100-RL provides the functionality to support connectivity to the network 100-NN, 508 for Remote UEs 100-RM. It can be used for both public safety services and commercial services (e.g. interactive service).

A UE is considered to be a Remote UE 100-RM for a certain ProSe UE-to-Network relay 100-RL if it has successfully established a PC5 link 502 to this ProSe 5G UE-to-Network Relay 100-RL. A Remote UE 100-RM can be located within NG-RAN 100-NN coverage or outside of NG-RAN c100-NN overage.

The ProSe 5G UE-to-Network Relay 100-RL shall relay unicast traffic (UL and DL) between the Remote UE 100-RM and the network 100-NN, 508, e.g. using the Uu interface 504. The ProSe UE-to-Network Relay 100-RL shall provide generic function that can relay any IP traffic.

The network may comprise an NG-RAN 100-NN, a 5G Core Network (5GC) 508 and an N6 link 506 to Access Stratum (AS) 510.

One-to-one Direct Communication is used between Remote UEs 100-RM and ProSe 5G UE-to-Network Relays 100-RL for unicast traffic as specified in solutions for Key Issue #2 in the 3GPP document TR 23.752, version 0.3.0.

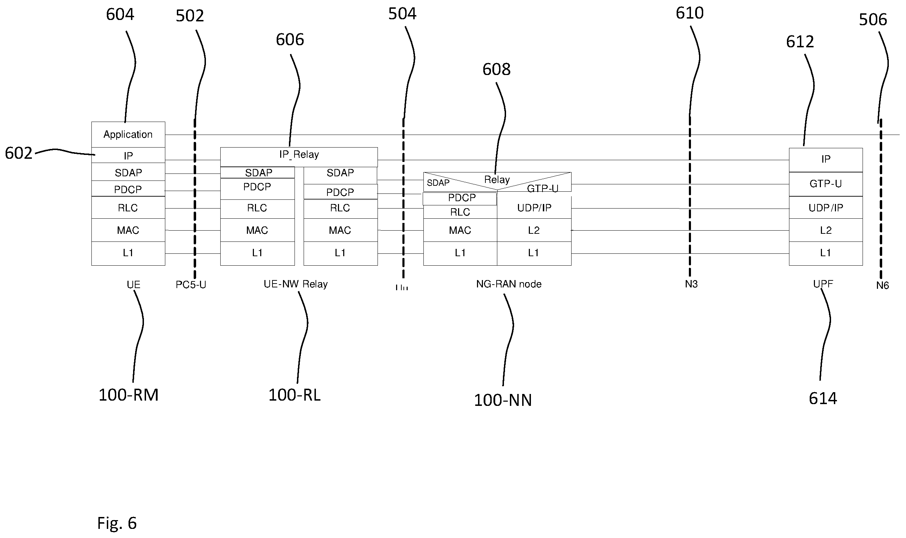

Fig. 6 schematically illustrates examples of protocol stacks for a L3 UE-to-Network Relay, e.g., according to ProSe 5G UE-to-Network Relay specified in the 3GPP document TR 23.752, version 0.3.0.

Hop-by-hop security is supported in the PC5 link 502 and Uu link 504. If there are requirements beyond hop-by-hop security for protection of RM radio device traffic, security over IP layer 602, 606, 612 needs to be applied.

Further security details (integrity and privacy protection for RM radio device to network communication) will be specified in SA WG3.

A ProSe 5G UE-to-Network Relay capable radio device (e.g., UE) 100- RL may register to the network (if not already registered) and establish a PDU session enabling the necessary relay traffic, or it may need to connect to additional PDU session(s) or modify the existing PDU session in order to provide relay traffic towards RM radio device(s) 100-RM (e.g., UE(s)). At least in some embodiments, PDU session(s) supporting UE-to-Network Relay shall only be used for Remote ProSe UE(s) relay traffic.

In Fig. 6, the network comprises a user plane function (UPF) at reference sign 614 with N3 link 610 to the network node 100-NN. The application layer 604 is an example of a transparent layer. Layers 606, 608 comprise an adaptation layer fort he relayed radio communication.

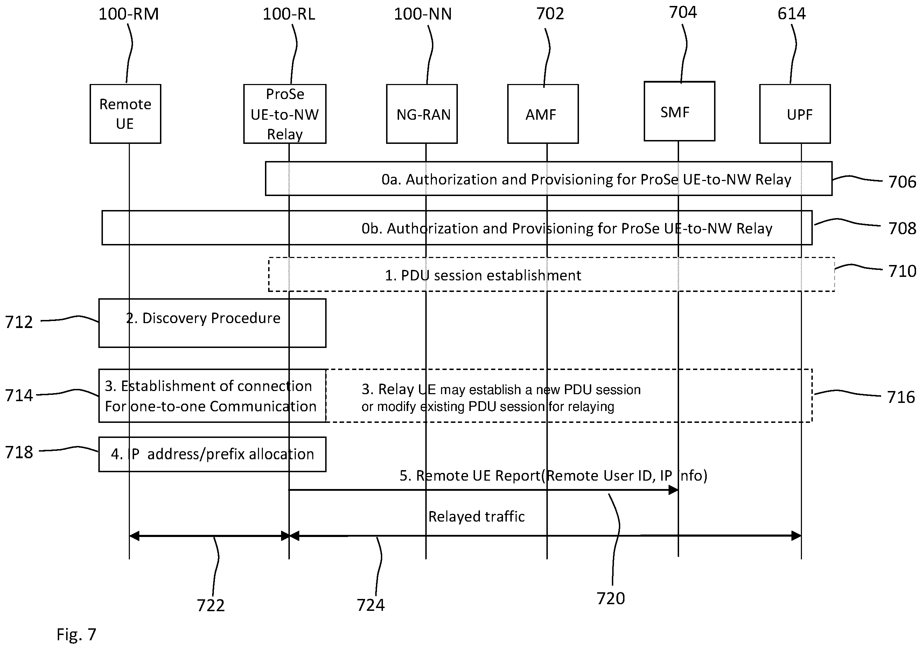

Fig. 7 schematically illustrates an example of a ProSe 5G UE-to-Network Relay according to the 3GGP document TR 23.752, version 0.3.0.

The RM radio device (e.g., UE) to network relayed radio communication in Fig. 7 comprises one or more of the following steps:
Step 0. During the Registration procedure, Authorization and provisioning is performed at reference signs 706 and 708 for the RL radio device (e.g., ProSe UE-to-NW relay) 100-RL and the RM radio device (e.g., remote UE) 100-RM, respectively. Authorization and provisioning procedure may be any solution for key issue #1 and #3 in the 3GPP document TR 23.752, version 0.3.0.

Step 1. The ProSe 5G UE-to-Network Relay may, at reference sign 710, establish a PDU session for relaying with default PDU session parameters received in step 0 (at reference signs 706, 708) or pre-configured in the RL radio device (e.g., UE-to-NW relay) 100-RL, e.g. S-NSSAI, DNN, SSC mode. In case of IPv6, the RL radio device (e.g., ProSe UE-to-Network Relay) 100-RL obtains the IPv6 prefix via prefix delegation function from the network as defined in TS 23.501 v16.5.0.

Step 2. Based on the Authorization and provisioning in step 0 (at reference sign 706, 708), at reference sign 712 the RM radio device (e.g., Remote UE) 100-RM performs discovery of a RL radio device (e.g., ProSe 5G UE-to-Network Relay) 100-RL using any solution for key issue #1 and #3 in the 3GPP document TR 23.752, version 0.3.0. As part of the discovery procedure the RM radio device (e.g., Remote UE) 100-RM learns about the connectivity service the RL radio device (e.g., ProSe UE-to-Network Relay) 100-RL provides.

Step 3. The RM radio device (e.g., Remote UE) 100-RM selects at reference sign 714 a RL radio device (e.g., ProSe 5G UE-to-Network Relay) 100-RL and establishes a connection for One-to-one ProSe Direct Communication as described in the 3GPP document TS 23.287, version 16.3.0 and/or modifies an existing communication as shown at reference sign 716.

If there is no PDU session satisfying the requirements of the PC5 connection with the RM radio device (e.g., remote UE) 100-RM, e.g. S-NSSAI, DNN, QoS, the RL radio device (e.g., ProSe 5G UE-to-Network Relay) 100-RL initiates a new PDU session establishment or modification procedure for relaying.

Step 4. At reference sign 718, IPv6 prefix or IPv4 address is allocated for the RM radio device (e.g., remote UE) 100-RM as it is defined in TS 23.303 v16.0.0 clauses 5.4.4.2 and 5.4.4.3. From this point the uplink and downlink relaying can start.

Step 5. The RL radio device (e.g., ProSe 5G UE-to-Network Relay) 100-RL sends a RM radio device (e.g., Remote UE) Report (e.g., comprising Remote User ID and/or IP info) message (e.g., through the access and mobility management function, AMF, 702) to the session management function (SMF) 704 for the PDU session associated with the relay. The Remote User ID is an identity of the RM radio device (e.g., Remote UE) user (provided via User Info) that was successfully connected in step 3 at reference signs 714, 716. The SMF 704 stores the Remote User IDs and the related IP info in the RL radio device (e.g., ProSe 5G UE-to-Network Relay) for the PDU connection associated with the relay.

For IP info the following principles apply:
- for IPv4, the UE-to-network Relay (e.g., comprising legs 722, 724) shall report TCP/UDP port ranges assigned to individual RM radio devices (e.g., Remote UE(s)) 100-RM (along with the Remote User ID);
- for IPv6, the UE-to-network Relay(e.g., comprising legs 722, 724) shall report IPv6 prefix(es) assigned to individual RM radio devices (e.g., Remote UE(s)) 100-RM (along with the Remote User ID).

The RM radio device (e.g., Remote UE) Report message at reference sign 720 shall be sent when the RM radio device (e.g., Remote UE) disconnects from the ProSe 5G UE-to-Network Relay (e.g. upon explicit layer-2 link release and/or based on the absence of keep alive messages over PC5) to inform the SMF 704 that the RM radio device(s) (e.g., Remote UE(s)) 100-RM has/have left.

In the case of Registration Update procedure involving SMF 704 change the Remote User ID(s) and/or related IP info corresponding to the connected RM radio device(s) (e.g., Remote UE(s)) are transferred to the new SMF 704 as part of SM context transfer for the relayed radio communication (e.g., ProSe 5G UE-to-Network Relay 100-RL).

It is noted that in order for the SMF 704 to have the RM radio device(s) (e.g., Remote UE(s)) 100-RM information, the Home Public Land Mobile Network (HPLMN) and the Visited PLMN (VPLMN), in which the RL radio device (e.g., ProSe 5G UE-to-Network Relay) 100-RL is authorized to operate, needs to support the transfer of parameters related to the RM radio device(s) (e.g., Remote UE(s)) 100-RM in case the SMF 704 is in the HPLMN.

It is further noted that when RM radio device(s) (e.g., Remote UE(s)) 100-RM disconnect from the RL radio device (e.g., ProSe UE-to-Network Relay) 100-RL, it is up to implementation how relaying PDU sessions are cleared and/or disconnected by the RL radio device (e.g., ProSe 5G UE-to-Network Relay) 100-RL.

After being connected to the RL radio device (e.g., ProSe 5G UE-to-Network Relay) 100-RL, the RM radio device (e.g., Remote UE) 100-RL keeps performing the measurement of the signal strength of the discovery message sent by the RL radio device (e.g., ProSe 5G UE-to-Network Relay 100-RLfor relay reselection.

The technique may also work when the RM and/or RL radio device (e.g., ProSe 5G UE-to-Network Relay UE) 100-RM and/or 100-RL connects in EPS using LTE. In this case for the RM radio device (e.g., Remote UE) report the procedures defined in TS 23.303 v16.0.0 can be used.

The relayed radio communication through the RL radio device 100-RL may be implemented as a Layer 2 (L2) UE-to-Network relay.

In the TR 23.752, version 0.3.0, clause 6.7, the layer-2 based RL radio device (e.g., UE-to-Network relay 100-RL) is described.

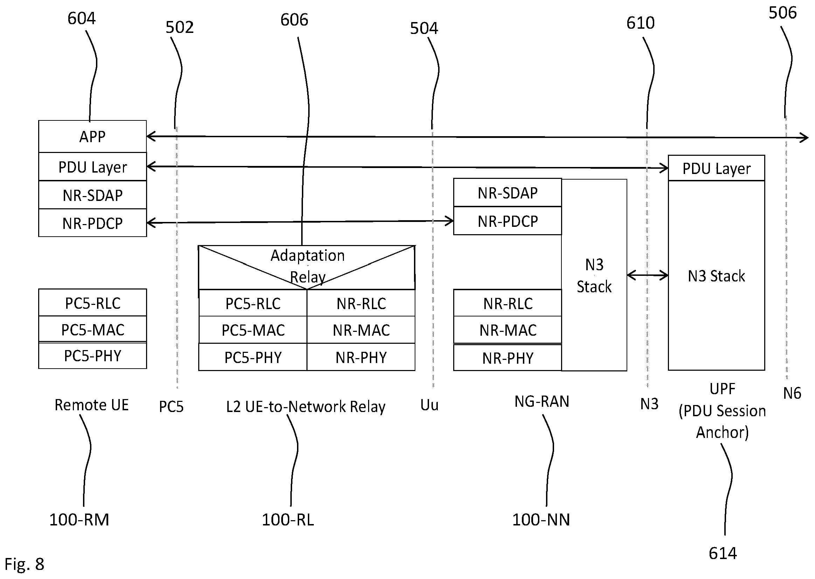

Hereinbelow, an example of the protocol architecture supporting a L2 RL radio device (e.g., UE-to-Network Relay UE) 100-RL is provided in connection with Fig. 8.

The L2 RL radio device (e.g., UE-to-Network Relay UE) 100-RL provides forwarding functionality that can relay any type of traffic over the PC5 link 502.

The L2 RL radio device (e.g., UE-to-Network Relay UE) 100-RL provides the functionality to support connectivity to the 5GS (e.g., NG-RAN 100-NN) for RM radio devices (e.g., Remote UEs) 100-RM. A radio device (e.g., UE) is considered to be a RM radio device (e.g., Remote UE) 100-RM if it has successfully established a PC5 link 502 to the L2 RL radio device (e.g., UE-to-Network Relay UE) 100-RL. A RM radio device (e.g., Remote UE) 100-RM can be located within NG-RAN 100-NN coverage or outside of NG-RAN 100-NN coverage.

Fig. 8 illustrates the protocol stack for the user plane transport according to the 3GPP document TR 23.752, version 0.3.0, related to a PDU session, including a Layer 2 RL radio device (e.g., UE-to-Network Relay UE) 100-RL. The PDU layer 802 corresponds to the PDU carried between the RM radio device (e.g., Remote UE) 100-RM and the Data Network (DN), e.g. represented by the UPF 614 in Fig. 8, over the PDU session. It is important to note that the two endpoints of the PDCP link are the RM radio device (e.g., Remote UE) and the network node (e.g., gNB) 100-NN. The relay function is performed below PDCP, e.g., a schematically depicted at reference sign 606. This means that data security is ensured between the RM radio device (e.g., Remote UE) 100-RM and the RAN and/or network node (e.g., gNB) 100-NN without exposing raw data at the RL radio device (e.g., UE-to-Network Relay UE) 100-RL.

The adaptation relay layer 606 within the RL radio device (e.g., UE-to-Network Relay UE) 100-RL can differentiate between signaling radio bearers (SRBs) and data radio bearers (DRBs) for a particular RM radio device (e.g., Remote UE) 100-RM. The adaption relay layer 606 is also responsible for mapping PC5 traffic (at reference sign 502) to one or more DRBs of the Uu interface at reference sign 504. The definition of the adaptation relay layer 606 is under the responsibility of RAN WG2.

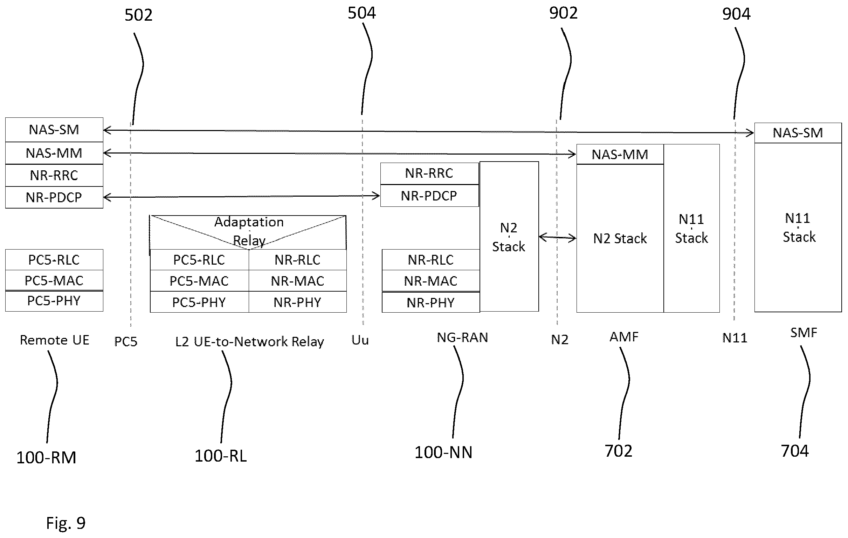

Fig. 9 illustrates the protocol stack of the non-access stratum (NAS) connection according to the 3GPP document TR 23.752, version 0.3.0 for the RM radio device (e.g., Remote UE) 100-RM to the NAS-MM and NAS-SM components at reference signs 702 and 704, respectively. The NAS messages are transparently transferred between the RM radio device (e.g., Remote UE) 100-RM and 5G-RAN 100-NN over the Layer 2 RL radio device (e.g., UE-to-Network Relay UE) 100-RL using the following:
- PDCP end-to-end connection where the role of the RL radio device (e.g., UE-to-Network Relay UE) 100-RL is to relay the PDUs over the signaling radio bear without any modifications.
- N2 connection between the 5G-RAN 100-NN and AMF 702 over N2 at reference sign 902.
- N3 connection between AMF 702 and SMF 704 over N11 at reference sign 904.

The role of the RL radio device (e.g., UE-to-Network Relay UE) 100-RL is to relay the PDUs from the signaling radio bearer without any modifications.

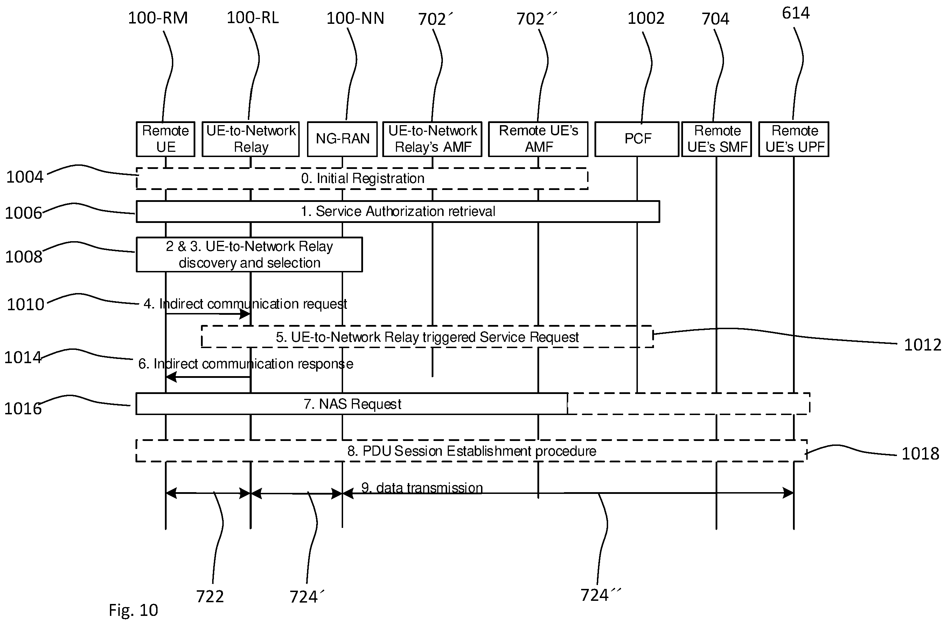

A connection establishment for the RM radio device 100-RM may comprise at least one of the steps in below described procedures in connection with Fig. 10, which schematically illustrates a connection establishment for a relayed (e.g., indirect) radio communication via a RL radio device (e.g., UE-to-Network Relay UE) 100-RL as described in the 3GPP document TR 23.752, version 0.3.0.

Step 0. If in coverage, the RM radio device (e.g., Remote UE) 100-RM and RL radio device (e.g., UE-to-Network Relay UE) 100-RL may independently perform the initial registration to the network according to registration procedures in TS 23.502 v16.5.0 at reference sign 1004. The allocated 5G global unique temporary identifier (GUTI) of the RM radio device (e.g., Remote UE) 100-RM is maintained when later NAS signaling between RM radio device (e.g., Remote UE) 100-RM and Network 100-NN is exchanged via the RL radio device (e.g., UE-to-Network Relay UE) 100-RL.

It is noted that the current procedures shown here assume a single hop relay. The technique disclosed herewith may be extended to multi-hop relay.

In a step 1 of the procedure at reference sign 1006, if in coverage, the RM radio device (e.g., Remote UE) 100-RM and RL radio device (e.g., UE-to-Network Relay UE) 100-RL independently get the service authorization for indirect communication from the network, e.g., from a Policy Charging Function (PCF) 1002.

Steps 2-3. The RM radio device (e.g., Remote UE) 100-RM and RL radio device (e.g., UE-to-Network Relay UE) 100-RL perform RL radio device (e.g., UE-to-Network Relay UE) discovery and selection at reference sign 1008.

Step 4. The RM radio device (e.g., Remote UE) 100-RM initiates a one-to-one communication connection with the selected RL radio device (e.g., UE-to-Network Relay UE) 100-RL over PC5, by sending an indirect communication request message to the RL radio device (e.g., UE-to-Network Relay) 100-RL at reference sign 1010.

Step 5. If the RL radio device (e.g., UE-to-Network Relay UE) 100-RL is in CM_IDLE state, triggered by the communication request received from the RM radio device (e.g., Remote UE) 100-RM, the RL radio device (e.g., UE-to-Network Relay UE) 100-RL sends a Service Request message over PC5 to its serving AMF 702' at reference sign 1012.

The Relay's AMF 702' may perform authentication of the RL radio device (e.g., UE-to-Network Relay UE) 100-RL based on NAS message validation and, if needed, the AMF 702' will check the subscription data.

If the RL radio device (e.g., UE-to-Network Relay UE) 100-RL is already in CM_CONNECTED state and is authorized to perform Relay service, the step 5 at reference sign 1012 is omitted.

Step 6. The RL radio device (e.g., UE-to-Network Relay UE) 100-RL sends the indirect communication response message to the RM radio device (e.g., Remote UE) 100-RM at reference sign 1014.

Step 7. The RM radio device (e.g., Remote UE) 100-RM sends a NAS message to the serving AMF 702" at reference sign 1016. The NAS message is encapsulated in an RRC message that is sent over PC5 to the RL radio device (e.g., UE-to-Network Relay UE) 100-RL, and the RL radio device (e.g., UE-to-Network Relay UE) 100-RL forwards the message to the NG-RAN 100-NN. The NG-RAN 100-NN derives the RM radio device's (e.g., Remote UE's) serving AMF 702" and forwards the NAS message to this AMF 702''.

It is noted that here it is assumed that the RM radio device's (e.g., Remote UE's) PLMN is accessible by the RL radio device (e.g., UE-to-Network Relay's) PLMN and that the RL radio device (e.g., UE-to-Network Relay UE) AMF 702' supports all S-NSSAls (e.g., network slice selection assistance information) the RM radio device (e.g., Remote UE) 100-RM may want to connect to.

If the RM radio device (e.g., Remote UE) 100-RM has not performed the initial registration to the network in step 0 at reference sign 1004, the NAS message is the initial registration message. Otherwise, the NAS message is a service request message.

If the RM radio device (e.g., Remote UE) 100-RM performs initial registration via the RL radio device (e.g., UE-to-Network relay) 100-RL, the RM radio device's (e.g., Remote UE's) 100-RM serving AMF 702" may perform authentication of the RM radio device (e.g., Remote UE) 100-RM based on NAS message validation and, if needed, the RM radio device's (e.g., Remote UE's) AMF 702" checks the subscription data.

For service request case, User Plane connection for PDU Sessions can also be activated. The other steps follow the clause 4.2.3.2 in TS 23.502 v16.5.0.

Step 8. The RM radio device (e.g., Remote UE) 100-RM may trigger the PDU Session Establishment procedure as defined in clause 4.3.2.2 of TS 23.502 v16.5.0 at reference sign 1018.

Step 9. The data is transmitted between RM radio device (e.g., Remote UE) 100-RM and UPF 614 via RL radio device (e.g., UE-to-Network Relay UE) 100-RL and NG-RAN 100-NN on the legs 722, 724' and 724". The RL radio device (e.g., UE-to-Network Relay UE) 100-RL forwards all the data messages between the RM radio device (e.g., Remote UE) 100-RM and NG-RAN 100-NN using the RAN specified L2 relay method.

Alternatively or in addition, in any embodiment disclosed herein, the relay radio device and/or the remote radio device and/or the further remote radio device may be configured to perform at least one or each of the following steps (e.g., in the step of determining the RLF and/or in the step of performing or initiating the release, the reconfiguration or the reestablishment).

Upon indication from sidelink RLC entity that the maximum number of retransmissions for a specific destination has been reached; or upon T400 expiry; or upon indication from sidelink MAC entity that the maximum number of consecutive HARQ discontinuous transmission (DTX) for a specific destination has been reached; or upon integrity check failure indication from sidelink PDCP entity concerning sidelink signaling radio bearer type 2 (SL-SRB2) or type 3 (SL-SRB3), the respective radio device may perform or initiate at least one of the following action steps.

A first action step comprises considering (e.g., determining) the sidelink radio link failure (i.e., the RLF of the SL) to be detected for this destination.

A second action step comprises releasing the DRBs of this destination, e.g., according to sub-clause 5.8.9.1a.1 of 3GPP document TS 38.331, e.g., version 16.2.0.

A third action step comprises releasing the SRBs of this destination, e.g., according to sub-clause 5.8.9.1a.3 of 3GPP document TS 38.331, e.g., version 16.2.0.

A fourth action step comprises discarding the NR sidelink communication related configuration of this destination.

A fifth action step comprises resetting the sidelink specific MAC of this destination.

A sixth action step comprises considering (e.g., determining) the PC5-RRC connection is released for the destination.

A seventh action step comprises indicating the release of the PC5-RRC connection to the upper layers for this destination. The indication may be indicative of PC5 being unavailable.

An eighth action step may comprise performing, if UE is in RRC_CONNECTED, the sidelink UE information for NR sidelink communication procedure, e.g., as specified in section 5.8.3.3 or sub-clause 5.10.X in the 3GPP document TS 36.331 e.g., version 16.2.0, or the 3GPP document TS 38.331, e.g., version 16.2.0.

Furthermore, the respective radio device may maintain or fulfill a keep-alive procedure, e.g., by indicating the determined RLF to upper layers. Whether and/or how to indicate the determined RLF may depend on an UE implementation.

Any embodiment disclosed herewith may meet one or more objective defined for 3GPP Rel-17 SI on NR sidelink relay in the 3GPP contribution RP-193253 and/or the below objectives and/or objective studied during 3GPP Rel-17 time frame.

Embodiments of the technique may fulfil at least one of the following items, e.g., in a single-hop NR sidelink-based relay.
1. A mechanism with minimum specification impact to support the System Architecture requirements for sidelink-based UE-to-network and UE-to-UE relay, focusing on the following aspects (if applicable) for layer-3 relay and layer-2 relay;
   A. Relay (re-)selection criterion and procedure;
   B. Relay/Remote UE authorization;
   C. QoS for relaying functionality;
   D. Service continuity;
   E. Security of relayed connection after SA3 has provided its conclusions;
   F. Impact on user plane protocol stack and control plane procedure, e.g., connection management of relayed connection;
2. A mechanism to support upper layer operations of discovery model/procedure for sidelink relaying, assuming no new physical layer channel / signal;

Embodiments of the technique may take into account further input from 3GPP SA WGs, e.g., SA2 and SA3, for the bullets above (if applicable).

Embodiments may assume that UE-to-network relay and UE-to-UE relay use the same relaying solution.

Embodiments may be forward compatibility for multi-hop relay support in a future release needs to be taken into account.

According to the above study objectives, SL based radio device-to-network and/or UE-to-network (U2N) relay and radio device-to- radio device and/or UE to UE (U2U) relay is envisaged to be studied. The study will also consider forward compatibility, e.g., the solution may be easily extended to be applicable for multi-hop relay.

Any one of the TX 100-TX and RX 100-RX may be implemented by a network node (e.g., a base station) 100-NN of the RAN or by the relay radio device (e.g., RL-UE) 100-RL or by the remote radio device (e.g., RM-UE) 100-RM.

Embodiments are described in the context of NR, e.g., the RM radio device (e.g., Remote UE) 100-RM and the RL radio device (e.g., relay UE) 100-RL are deployed in a same or different NR cell, e.g. cell 302 in Fig. 3. The embodiments are also applicable to other relay scenarios including radio device (e.g., UE) to network relay or radio device (e.g., UE) to radio device (e.g., UE) relay where the RM radio device (e.g., Remote UE) 100-RM and the RL radio device (e.g., relay UE) 100-RL may be based on LTE SL and/or NR SL, the Uu connection between the RL radio device (e.g. relay UE) and the RAN (e.g., base station) 100-NN may be LTE Uu or NR Uu. A relay scenario containing multiple relay hops is also covered. The connection between a RM radio device (e.g. Remote UE) 100-RM and a RL radio device (e.g. relay UE) 100-RL is also not limited to a SL. Any short range communication technology, such as Wi-Fi, is equally applicable.

In the below embodiments, for illustrative purposes any D2D communication may be (as an example without limitation) a SL between two radio devices (e.g. UEs).

The embodiments are also applicable to a relay scenario where the RL radio device (e.g., relay UE) 100-RL is configured with multiple connections (e.g., the number of connections is equal to or larger than two) to the RAN 100-NN (e.g., dual connectivity and/or carrier aggregation, etc.).

The embodiments are described in the context of NR, i.e., remote UE and relay UE are deployed in a same or different NR cell. The embodiments are also applicable to other relay scenarios including UE to network relay or UE to UE relay where the link between remote UE and relay UE may be based on LTE sidelink or NR sidelink, the Uu connection between relay UE and base station may be LTE Uu or NR Uu. A relay scenario containing multiple relay hops is also covered. The connection between remote UE and relay UE is also not limited to sidelink. Any short range communication technology such as Wi-Fi is equally applicable. In the below embodiments, any grant issued by the gNB is for a sidelink transmission between two UEs.

The embodiments are also applicable to a relay scenario where the relay UE is configured with multiple connections (i.e., the number of connections is equal or larger than two) to the RAN (e.g., dual connectivity, carrier aggregation *etc*.)*.*

The embodiments are applicable to both L2 relay and L3 relay based relay scenarios.

For concreteness, and without limitation thereto, the relay radio device is referred to as a relay UE (or RL-UE), the remote radio device is referred to as a remote UE (or RM-UE), and the RAN or the network node of the RAN is referred to as a gNB. The further remote radio device is referred to as a further radio device, another UE or another destination UE.

Furthermore, the term "direct path" may stand for a direct radio connection from a remote UE to a gNB or a UE. The term "indirect path" may stand for an indirect radio connection between a remote UE and a gNB or another destination UE via an intermediate node, e.g., the relay radio device (which may be a relay UE or a relay network node, e.g., a relay gNB).

The technique may be implemented for a RLM procedure and/or a RLF procedure performed at the relay UE. The RLM procedure and/or the determining of the RLF may be performed on the link between the remote UE and relay UE (e.g., the SL) and/or the link between the relay UE and the gNB (e.g., the UL or DL) or the destination node. In the following, embodiments considering that the destination node is the gNB are described, but the same embodiments may also be realized in case the destination node (e.g., the gNB) is another UE (e.g., the further remote radio device).

At least one of the following features may be implemented at the RX or TX.

To reduce signaling overhead due to configuration or reconfiguration of a temporary UE ID, a remote UE may be configured with a list or a pool of temporary UE IDs. The UE can randomly select any of the temporary IDs for a transmission. A temporary ID may be cleared after a given number of transmissions/time period/number of PDUs which are transmitted. The temporary ID list or pool can be reconfigured to the UE from time to time when it is necessary. Alternatively, in case the transmitter node uses all the available temporary ID configured (or part of the available pool), the transmitter node needs to ask for a reconfiguration of the security parameters. This means that a temporary ID can be used only once and cannot be reused.

Alternatively, a temporary UE ID generation method is configured to a UE. The configuration is signaled by a coordinator UE node which is a UE node operating as coordinator in a proximity distance. Alternatively, the configuration is signaled by an application server. The configuration is signaled to nodes in an encrypted message (e.g., via dedicated RRC, PC5-S, or broadcast). Each UE/node can generate a temporary ID based on the configured method. The method may take the actual UE ID as an input. By applying the same method, a receiver UE or node can verify if a received temporary ID is valid or not.

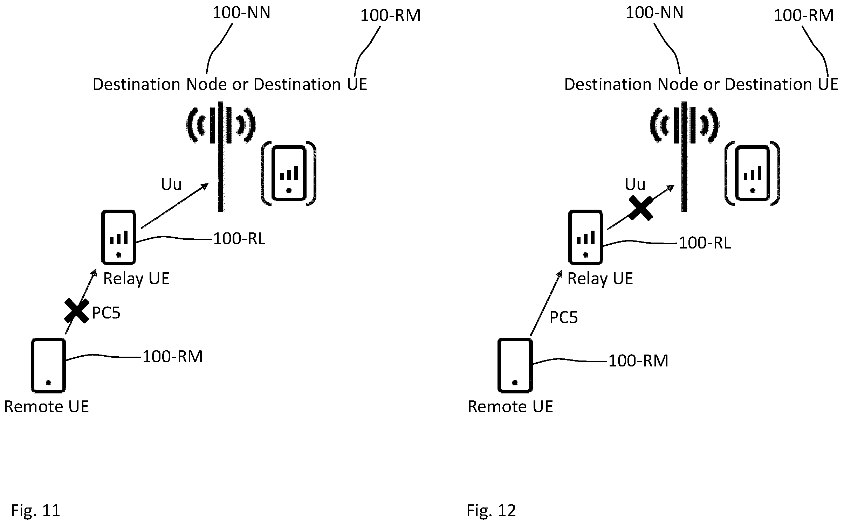

The RLM (i.e., an RLM procedure) and/or the determining of the RLF may be performed at the relay UE. Fig. 11 schematically illustrates an example implementation of the technique in case the RLF is detected at the SL (e.g., a PC5 link). Fig. 12 illustrates schematically a RLF on the Uu link.

The relay radio device 100-RL may be embodied alternatively or in combination with any of the features disclosed for the first method aspect and first device aspect, particularly those in the list of claims, according to at least one of the following embodiments.

In a first embodiment, the relay UE performs RLM on both a PC5 and Uu link. An RLF event is declared on either of the PC5 link and the Uu link if at least one of the below RLF conditions is met.

A first RLF condition comprises that a maximum number of out of sync on the link instances has been reached.

The relay UE may monitor the PC5 or Uu radio channel quality based on a specific reference symbol. The relay UE compares the measured channel quality with the out-of-sync and in-sync thresholds, Qout and Qin respectively. The PC5 and Uu physical channel evaluates the PC5 or Uu channel quality, respectively, periodically sends indication on out-of-sync or in-sync, to layer 3. The relay UE layer 3 then evaluates, if the radio link failure based on the in-sync and out-of-sync indications, that output from the layer 3 filter. For RLM on the PC5 and Uu link, a counter and/or a timer may be defined. In an example, when the consecutively received out-of-sync indications are beyond a configured counter, a timer is started. While the timer is running, the radio link considered to be recovered if the UE consecutively receives a configured number of in-sync indications from the physical layer.

A second RLF condition comprises that a maximum number of RLC retransmissions has been reached.

A third RLF condition comprises that a configuration or reconfiguration error occurs upon reception of a RRC configuration/reconfiguration signaling message.

A fourth RLF condition comprises a maximum number of HARQ retransmissions or discontinuous transmission (DTX) has been reached.

RLF event on the PC5 link is handled by the PC5-RRC entity, while RLF event on the Uu link is handled by the Uu RRC entity.

The relay UE may keep the RLM/RLF procedure on the PC5 and Uu running in parallel or execute only of them based on a configuration by the network, or some pre-configuration hard-coded in the spec. In any case, the RLM/RLF procedures of the PC5 link is completely independent from the RLM/RLF procedures on the Uu link, since the configuration and event trigger are handled by different RRC entities.

In a second embodiment, the relay UE may keep the two RLM/RLF procedures running in parallel, in this case, there may be RLF triggered on both links. Upon declaration of an RLF event firstly on one link (PC5 or Uu), the relay UE will further check the other link to see if RLF is also being triggered. After that, the relay UE may take any one of the below options to determine whether to release the relay path.

Option 1: releases the relay path, and releases both the PC5-RRC connection and the Uu RRC connection regardless if the other link has also failed or release only one of them (whichever link fails first, the other link is remaining).

Option 2: the relay UE waits for a configured time period. A timer may be configured accordingly. The timer is intended to allow the relay UE to wait for a time period to further check if the link in failure (PC5 or Uu) can be recovered. The timer may be a new timer, or reuse an existing timer (e.g., a timer in PC5 or Uu RLM/RLF procedure). During the timer is running, the UE keeps the relay path unchanged, meanwhile, the remote UE and gNB stops data transmission or reception on the relay path (this means the relay UE may inform them that radio link problems have been detected, alternatively triggered upon detection of RLF event on any link of the relay path, i.e., remote UE and/or gNB can also detect RLF event independently from relay UE).

The relay UE takes one of the below actions.
- While the timer is running, if the relay UE declares an RLF event on the other link which was previously not failed (i.e., if RLF is firstly declared on the PC5 link, the other link is the Uu link. If RLF is firstly declared on the Uu link, the other link is the PC5 link), the relay UE performs actions specified in Option 1. The relay UE stops the timer and may inform the remote UE and gNB that they should stop to transmit and receive packet on the relay path.
- While the timer is running, if the relay UE doesn't declare an RLF event on the other link which was previously not failed (i.e., if RLF is firstly declared on the PC5 link, the other link is the Uu link. If RLF is firstly declared on the Uu link, the other link is the PC5 link), the UE will further check if the link where the RLF was detected is recovered. If the link is recovered, the relay UE cancels the triggered RLF event and resumes data transmission and reception on the relay path. The relay UE stops the timer and may inform the remote UE and gNB that they can start again to transmit and receive packet on the relay path.
- While the timer is expired, if the relay UE doesn't declare an RLF event on the other link which was previously not failed (i.e., if RLF is firstly declared on the PC5 link, the other link is the Uu link. If RLF is firstly declared on the Uu link, the other link is the PC5 link) and the failed link is not recovered, the relay UE performs actions specified in Option 1. The remote UE stops the timer and may inform the remote UE and gNB that they should stop to transmit and receive packet on the relay path.

Option 3: If the RLF is only detected on the PC5 link, the relay UE can reconfigure the PC5 link without releasing it. When reconfiguring the link, the relay UE can perform a BWP switch, or can select a new DRB/LCH/bearer on which to send and receive the traffic. Reconfiguring the PC5 link may also mean select and alternative PC5 configuration that was previously sent by the gNB (or hard-coded in the spec) when the relay path established. Please, note that this options is may be only valid when the RLF is due to a reconfiguration failure and switching to a new BWP with a different configuration may restore the connectivity.

The gNB can configure which option that the relay UE can apply. Alternatively, which option is applied by the relay UE is captured in a spec in a hard-coded fashion.

In a third embodiment, upon detection of RLF by the relay UE on one or both links, if the relay path has been released, the remote UE will sooner or later also detect RLF on the PC5 link. After that, the remote UE will also release the relay path and also release the relevant RRC entities. After that, the remote UE may therefore perform further recovery actions.

In a fourth embodiment, if the RLF is only detected on the Uu link, the relay UE may determine to only release the Uu link. After that, the relay UE may apply one of the below recovery options.

Option 1: trigger RRC re-establishment procedure. The connection to the remote UE may be released before (or after) the re-establishment procedure finishes. Alternatively, the relay UE does not release the PC5 link and may include in the re-establishment request message, to be sent to the gNB, information of the current PC5 configuration. The target gNB (i.e., may be the same gNB or a different gNB as the old gNB) may decide to keep the old PC5 configuration and provide a new one. If a new one is provided then the PC5 link is released and added again. Otherwise, the old PC5 link can be still used (this means that the old PC5 link is remained).

During the RRC reestablishment procedure, the relay UE shall first perform cell search to determine the best cell for radio link re-establishment. The relay UE can select the same cell, a different cell from the same gNB, or a prepared cell from a different gNB, wherein the activity can be resumed (i.e., the relay UE stays in connected mode) via radio connection re-establishment procedure since the previous UE context can be retrieved by inter-cell communication. However, when a prepared cell is not available, the UE selects an unprepared cell. In this case, the relay UE has to go to idle mode and try to setup the radio connection afterwards. In this case, activity of the relay UE cannot be resumed.

In case the relay UE needs to go to RRC IDLE, i.e., activity of the relay UE cannot be resumed. The relay UE would take even longer time to setup the connection to the gNB, which may cause un-acceptable service interruption to the remote UE. In this case, the relay UE may inform the remote UE that the relay UE needs to switch to RRC IDLE due to RLF (e.g., on the Uu). The remote UE can determine whether to release the relay path. Alternatively, whether the relay path needs to be released, is decided by the relay UE, the relay UE can inform the remote UE of the decision. If the relay path is released, the remote UE may therefore perform further recovery actions.

Option 2: Initiate a RACH procedure, send a signaling in a RACH message (i.e., Msg3 in case of 4-step RACH, or MsgA in case of 2-step RA) to inform the gNB that a failure has been detected on the Uu link. The signaling may be carried by a RRC message (e.g., RRC re-establishment request, or a MAC CE, or indicators in the MAC subheader. Alternatively, the signaling may be indicated via specific PRACH preambles or PRACH resources (e.g., RACH occasion). This signaling means that the re-establishment procedure is not fully performed (but only the first message of the procedure is sent). Once the indication is received by the gNB, a new configuration for the relay path may be sent in SIB or a new RRC connection establishment may be triggered by the gNB.

In Option 2, the relay UE may have already stored a target cell or a list of target cells for potential direct connections when the relay UE was in coverage. In yet another alternative, while the relay UE is involved in a relay path, it searches in background potential target cells to be used in case an RLF (or other similar events) happens.

In a fifth embodiment, after recovery from the RLF event, the relay UE sends a report message including failure related information to the RAN node (e.g., the new serving gNB, and/or the old serving gNB) or to the new remote UE. The report may be further sent to the CN nodes (e.g., the new serving AMF and/or the old serving AMF). The report message may be also forwarded to the old remote UE about the RLF detected on the old relay path. If the RLF report is sent to the new remote UE, the new remote UE may choose to send the RLF report to the old remote UE, e.g., (if possible) to establish a PC5 connection between them.

In a sixth embodiment, at least one of the below information may be carried or indicated by the report message:
- Remote ID
- Destination L2 ID
- Old Relay ID
- Cell ID
- New Relay ID
- Relay path ID
- Failure cause/ Indicators on events that RLF has been declared on the links (PC5 and/or Uu link).
- Available measurements on the links (PC5 and/or Uu link) / Radio quality indicators of the links (PC5 and/or Uu link), for which links the RLF has been determined (e.g., declared). Such measures or indicators may comprise at least one of reference signal received power (RSRP), reference signal received quality (RSRQ), Received Signal Strength Indicator (RSSI), signal-to-noise ratio (SNR), and signal to noise-and-interference ratio (SINR).
- QoS indicators such as latency, packet loss, priority, jitter etc. of services which are affected by RLF.
- Buffer status report.
- Power headroom report.
- The indices for cells or BWPs or carriers or PLMNs that suffer from or are affected by or cause the RLF.

In a seventh embodiment, the relay UE can perform RLM in order to detect an "early RLF". Here with "early RLF" we mean that the link where the RLM is performed is not totally failed, but the probability that is going to fail is high. In this case, the relay UE it has still the chance to transmit messages with the current remote UE and/or gNB even if is not guaranteed that the link will be stable.

When the relay UE has detected an early RLF, it may perform or initiate at least one of the following action options:
Action Option 1. If the early RLF has been detected on the PC5 link, the relay UE transmits in the claimed invention an indication to the remote UE for indicating the detected early RLF. Once receiving the early RLF indication, the remote UE may:
- Inform the gNB, if a Uu link is already available between the remote UE or the gNB or, if the Uu link is not available yet, the remote UE can perform Action Option 2: trigger relay UE reselection, and select a target relay UE. The connection to the old relay UE may be released before or after the reselection procedure finishes.

Action Option 3: select a cell and perform RACH to establish a direct Uu connection meaning in this case that there will be only a direct connection and not a relay one.
- In Option 2, the remote UE may have already stored a target cell or a list of target cells for potential direct connections when the remote UE was in coverage. Alternatively, the stored cell list was obtained from the old relay UE. In yet another alternative, the remote UE is allowed to trigger cell selection and reselection procedure to search potential target cells.

Action Option 4: the remote UE is allowed to reselect either a target relay UE or a target cell. During the reselection procedure, the remote UE may measure radio quality for both target relay UEs and target cells. Based on measurements, the remote UE selects the one (either a relay UE or a target cell) with strongest radio channel quality. The measurement may be performed in terms of metrics such as RSRP, RSRQ, RSSI, SINR, SNR etc. In order to compare measurements between PC5 link and Uu link, an offset may be configured. For a target relay UE, the remote UE may be also required to consider measurements on links including both PC5 link between the remote UE and the target relay UE, and Uu link between the target relay UE and gNB.
- The gNB can configure which option that the remote UE can apply. Alternatively, which option is applied by the remote UE is captured in a spec in a hard coded fashion.

Action Option 5. If the early RLF has been detected on the Uu link, the relay UE sends an indication to the gNB for indicating the detected early RLF.

Once receiving the early RLF indication (e.g., the report), the gNB may choose to, e.g., perform or initiate (e.g., by means of the control message to the relay UE), at least one of the following items:
- Release the relay path
- Reconfigure the relay path by sending a reconfiguration message to both the relay and remote UE. This is valid only for the case when the RLF is due to a reconfiguration failure.
- Reconfigure only the Uu link that may fail. Therefore a new configuration is sent only to the relay UE. This is valid only for the case when the RLF is due to a reconfiguration failure.
- Decide to perform handover (handoff the remote UE to a new target gNB) or path switch (instructs the remote UE to change the relay path over a new relay UE).
- Do nothing.

In an eighth embodiment, which actions the relay UE should perform, according to what is described in any of the above embodiment, is configured by the gNB via dedicated Uu RRC signaling or SIBs or can also be pre-configured. Alternatively, which actions the relay UE should perform may also be configured by the remote UE via direct PC5 RRC signaling or sidelink broadcast/groupcast.

In a ninth embodiment, the relay UE when sending a report indicating RLF to the gNB or remote UE, it may send such indication via RRC, via control PDU of the adaptation layer, or via MAC CE, or via DCI (if is over Uu link) or SCI (if is over PC5 link).

Any embodiment of the RL UE may perform at least one of the following actions.

The methods can target to handle the relay UE actions when an RLF is detected.

These actions may have the main target to lower the connectivity interruption delay and reduce the signaling overhead. In particular, the methods proposed for the relay UE comprise that, upon detecting RLF in the link between relay UE and remote UE, or relay UE and destination node (e.g., gNB or a destination remote UE), the relay UE performs at least one of the following actions.

A first action comprises the relay UE releasing the entire relay path. This means that the other relay nodes may figure out that the relay path was released if the inactivity timer expires or via keep alive message or via the expiry of the timer T400.

A second action comprises the Relay UE try to reconfigure the PC5 link (if the RLF has been detected on the link between relay UE and remote UE). This implies that the relay UE may change some PC5 configuration e.g., change of BWP, change of carrier frequency, or change of LCH/DRB/Bearer, and inform the remote UE about the new configuration.

A third action comprises the RRC re-establishment being triggered by the relay UE. For example, the relay UE will trigger re-establishment on the Uu link in order to select a new gNB. When a new gNB is selected, information about the existing PC5 information may be sent to the new gNB that then can decide to keep the current PC5 relay path or configure a new one.

A fourth action comprises the relay UE sending an indication to the gNB/destination UE that a failure on the relay path has been detected.

In this case the relay UE may not release the path but instead waiting for a new configuration from the gNB/destination UE. In this case no RACH is needed since the Uu link is still in place.

If the RLF has been detected on the Uu link, then the reporting to the gNB is only valid is the relay UE performed an early RLF detected.

In a fifth action, the relay UE send an indication to (e.g., all) remote UE(s) that an RLF has been detect.

This means that the remote UE may be notified about the reconfiguration via the PC5-RRC signaling, or via a control PDU of the adaptation layer or via a MAC CE.

As a further alternative, the relay UE may also instruct the remote UE to perform some recovery actions (via the PC5-RRC signaling, or via a control PDU of the adaptation layer or via a MAC CE).

If the RLF has been detected on the PC5 link, then the reporting to the remote UE is only valid is the relay UE performed an early RLF detected.

Embodiments of the methods and devices target to handle UE actions when an RLF is detected. These actions have the main target to lower the connectivity interruption delay and reduce the signaling overhead. This it is still valid whether a L3- or a L2-based relay solution is used.

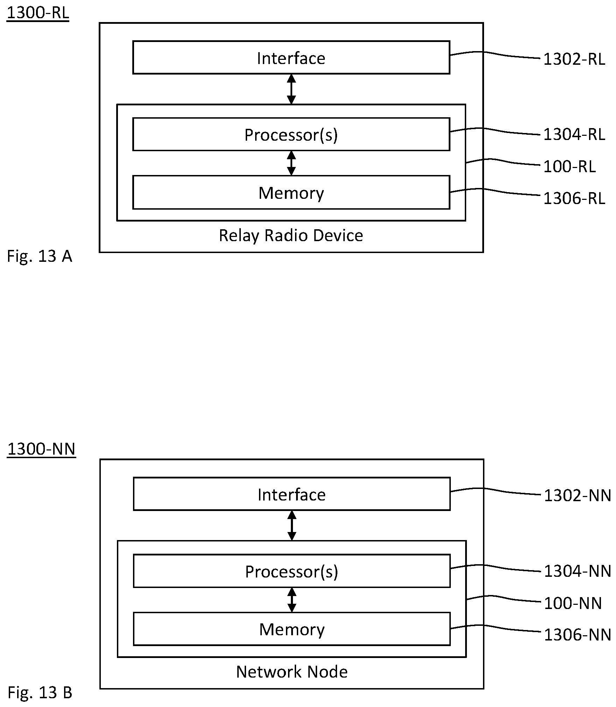

Fig. 13A shows a schematic block diagram for an embodiment of a relay radio device 100-RL. The device 100-RL comprises one or more processors 1304-RL for performing the method 200-RL and memory 1306-RL coupled to the processors 1304-RL. For example, the memory 1306-RL may be encoded with instructions that implement at least one of the units labeled 1xy-RL (e.g., 102-RL and 104-RL).

The one or more processors 1304-RL may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100-RL, such as the memory 1306-RL, relay radio device functionality. For example, the one or more processors 1304-RL may execute instructions stored in the memory 1306-RL. Such functionality may include providing various features and steps discussed herein, including any of the benefits disclosed herein. The expression "the device being operative to perform an action" may denote the device 100-RL being configured to perform the action.

As schematically illustrated in Fig. 13A, the device 100-RL may be embodied by a RL radio device 1300-RL, e.g., functioning as a relay radio device. The RL radio device 1300-RL comprises a radio interface 1302-RL coupled to the device 100-RL for radio communication with one or more base stations or UEs.

Fig. 13B shows a schematic block diagram for an embodiment of the network node 100-NN. The network node 100-NN comprises one or more processors 1304-NN for performing the method 200-NN and memory 1306-NN coupled to the processors 1304-NN. For example, the memory 1306-NN may be encoded with instructions that implement at least one of the units labeled 102-NN, 104-NN, 100-RX and/or 100-TX.

The one or more processors 1304-NN may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100-NN, such as the memory 1306-NN, RAN functionality. For example, the one or more processors 1304-NN may execute instructions stored in the memory 1306-NN. Such functionality may include providing various features and steps discussed herein, including any of the benefits disclosed herein. The expression "the network node being operative to perform an action" may denote the device 100-NN being configured to perform the action.

As schematically illustrated in Fig. 13B, the network node 100-NN may be embodied by a network node 1300-NN, e.g., functioning as a base station or a central unit. The network node 1300-NN comprises a radio interface 1302-NN coupled to the device 100-NN for radio communication with one or more base stations or UEs.

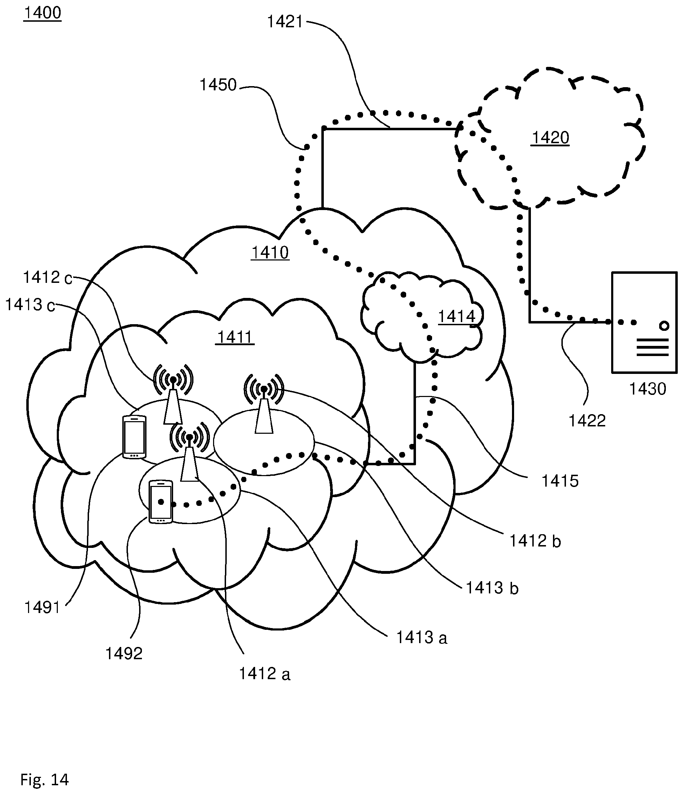

With reference to Fig. 14, in accordance with an embodiment, a communication system 1400 includes a telecommunication network 1410, such as a 3GPP-type cellular network, which comprises an access network 1411, such as a radio access network, and a core network 1414. The access network 1411 comprises a plurality of base stations 1412a, 1412b, 1412c, such as NBs, eNBs, gNBs or other types of wireless access points, each defining a corresponding coverage area 1413a, 1413b, 1413c. Each base station 1412a, 1412b, 1412c is connectable to the core network 1414 over a wired or wireless connection 1415. A first user equipment (UE) 1491 located in coverage area 1413c is configured to wirelessly connect to, or be paged by, the corresponding base station 1412c. A second UE 1492 in coverage area 1413a is wirelessly connectable to the corresponding base station 1412a. While a plurality of UEs 1491, 1492 are illustrated in this example, the disclosed embodiments are equally applicable to a situation where a sole UE is in the coverage area or where a sole UE is connecting to the corresponding base station 1412.

The telecommunication network 1410 is itself connected to a host computer 1430, which may be embodied in the hardware and/or software of a standalone server, a cloud-implemented server, a distributed server or as processing resources in a server farm. The host computer 1430 may be under the ownership or control of a service provider, or may be operated by the service provider or on behalf of the service provider. The connections 1421, 1422 between the telecommunication network 1410 and the host computer 1430 may extend directly from the core network 1414 to the host computer 1430 or may go via an optional intermediate network 1420. The intermediate network 1420 may be one of, or a combination of more than one of, a public, private or hosted network; the intermediate network 1420, if any, may be a backbone network or the Internet; in particular, the intermediate network 1420 may comprise two or more sub-networks (not shown).

The communication system 1400 of Fig. 14 as a whole enables connectivity between one of the connected UEs 1491, 1492 and the host computer 1430. The connectivity may be described as an over-the-top (OTT) connection 1450. The host computer 1430 and the connected UEs 1491, 1492 are configured to communicate data and/or signaling via the OTT connection 1450, using the access network 1411, the core network 1414, any intermediate network 1420 and possible further infrastructure (not shown) as intermediaries. The OTT connection 1450 may be transparent in the sense that the participating communication devices through which the OTT connection 1450 passes are unaware of routing of uplink and downlink communications. For example, a base station 1412 need not be informed about the past routing of an incoming downlink communication with data originating from a host computer 1430 to be forwarded (e.g., handed over) to a connected UE 1491. Similarly, the base station 1412 need not be aware of the future routing of an outgoing uplink communication originating from the UE 1491 towards the host computer 1430.

By virtue of the methods 200-RL and 200-NN being performed by any one of the UEs 1491 or 1492 and/or any one of the base stations 1412, the performance of the OTT connection 1450 can be improved, e.g., in terms of increased throughput and/or reduced latency.

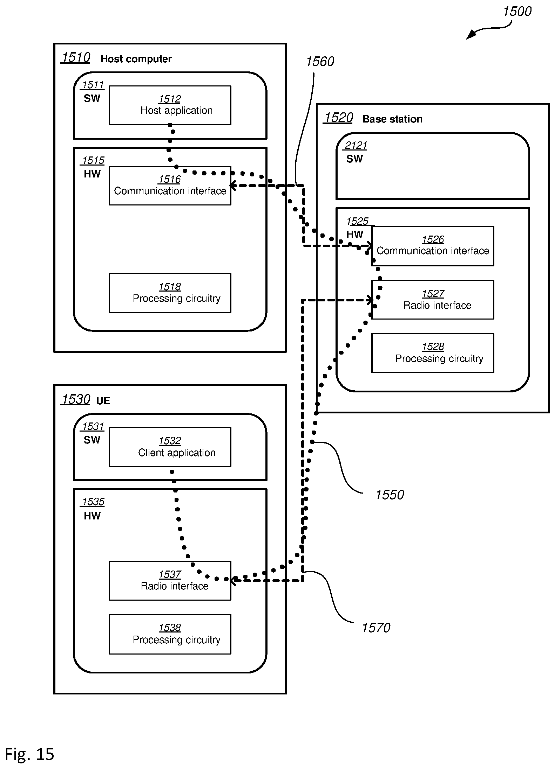

Example implementations, in accordance with an embodiment, of the UE, base station and host computer discussed in the preceding paragraphs will now be described with reference to Fig. 15. In a communication system 1500, a host computer 1510 comprises hardware 1515 including a communication interface 1516 configured to set up and maintain a wired or wireless connection with an interface of a different communication device of the communication system 1500. The host computer 1510 further comprises processing circuitry 1518, which may have storage and/or processing capabilities. In particular, the processing circuitry 1518 may comprise one or more programmable processors, application-specific integrated circuits, field programmable gate arrays or combinations of these (not shown) adapted to execute instructions. The host computer 1510 further comprises software 1511, which is stored in or accessible by the host computer 1510 and executable by the processing circuitry 1518. The software 1511 includes a host application 1512. The host application 1512 may be operable to provide a service to a remote user, such as a UE 1530 connecting via an OTT connection 1550 terminating at the UE 1530 and the host computer 1510. In providing the service to the remote user, the host application 1512 may provide user data, which is transmitted using the OTT connection 1550. The user data may depend on the location of the UE 1530. The user data may comprise auxiliary information or precision advertisements (also: ads) delivered to the UE 1530. The location may be reported by the UE 1530 to the host computer, e.g., using the OTT connection 1550, and/or by the base station 1520, e.g., using a connection 1560.

The communication system 1500 further includes a base station 1520 provided in a telecommunication system and comprising hardware 1525 enabling it to communicate with the host computer 1510 and with the UE 1530. The hardware 1525 may include a communication interface 1526 for setting up and maintaining a wired or wireless connection with an interface of a different communication device of the communication system 1500, as well as a radio interface 1527 for setting up and maintaining at least a wireless connection 1570 with a UE 1530 located in a coverage area (not shown in Fig. 15) served by the base station 1520. The communication interface 1526 may be configured to facilitate a connection 1560 to the host computer 1510. The connection 1560 may be direct or it may pass through a core network (not shown in Fig. 15) of the telecommunication system and/or through one or more intermediate networks outside the telecommunication system. In the embodiment shown, the hardware 1525 of the base station 1520 further includes processing circuitry 1528, which may comprise one or more programmable processors, application-specific integrated circuits, field programmable gate arrays or combinations of these (not shown) adapted to execute instructions. The base station 1520 further has software 1521 stored internally or accessible via an external connection.

The communication system 1500 further includes the UE 1530 already referred to. Its hardware 1535 may include a radio interface 1537 configured to set up and maintain a wireless connection 1570 with a base station serving a coverage area in which the UE 1530 is currently located. The hardware 1535 of the UE 1530 further includes processing circuitry 1538, which may comprise one or more programmable processors, application-specific integrated circuits, field programmable gate arrays or combinations of these (not shown) adapted to execute instructions. The UE 1530 further comprises software 1531, which is stored in or accessible by the UE 1530 and executable by the processing circuitry 1538. The software 1531 includes a client application 1532. The client application 1532 may be operable to provide a service to a human or non-human user via the UE 1530, with the support of the host computer 1510. In the host computer 1510, an executing host application 1512 may communicate with the executing client application 1532 via the OTT connection 1550 terminating at the UE 1530 and the host computer 1510. In providing the service to the user, the client application 1532 may receive request data from the host application 1512 and provide user data in response to the request data. The OTT connection 1550 may transfer both the request data and the user data. The client application 1532 may interact with the user to generate the user data that it provides.

It is noted that the host computer 1510, base station 1520 and UE 1530 illustrated in Fig. 15 may be identical to the host computer 1430, one of the base stations 1412a, 1412b, 1412c and one of the UEs 1491, 1492 of Fig. 14, respectively. This is to say, the inner workings of these entities may be as shown in Fig. 15 and independently, the surrounding network topology may be that of Fig. 14.

In Fig. 15, the OTT connection 1550 has been drawn abstractly to illustrate the communication between the host computer 1510 and the use equipment 1530 via the base station 1520, without explicit reference to any intermediary devices and the precise routing of messages via these devices. Network infrastructure may determine the routing, which it may be configured to hide from the UE 1530 or from the service provider operating the host computer 1510, or both. While the OTT connection 1550 is active, the network infrastructure may further take decisions by which it dynamically changes the routing (e.g., on the basis of load balancing consideration or reconfiguration of the network).

The wireless connection 1570 between the UE 1530 and the base station 1520 is in accordance with the teachings of the embodiments described throughout this disclosure. One or more of the various embodiments improve the performance of OTT services provided to the UE 1530 using the OTT connection 1550, in which the wireless connection 1570 forms the last segment. More precisely, the teachings of these embodiments may reduce the latency and improve the data rate and thereby provide benefits such as better responsiveness.

A measurement procedure may be provided for the purpose of monitoring data rate, latency and other factors on which the one or more embodiments improve. There may further be an optional network functionality for reconfiguring the OTT connection 1550 between the host computer 1510 and UE 1530, in response to variations in the measurement results. The measurement procedure and/or the network functionality for reconfiguring the OTT connection 1550 may be implemented in the software 1511 of the host computer 1510 or in the software 1531 of the UE 1530, or both. In embodiments, sensors (not shown) may be deployed in or in association with communication devices through which the OTT connection 1550 passes; the sensors may participate in the measurement procedure by supplying values of the monitored quantities exemplified above, or supplying values of other physical quantities from which software 1511, 1531 may compute or estimate the monitored quantities. The reconfiguring of the OTT connection 1550 may include message format, retransmission settings, preferred routing etc.; the reconfiguring need not affect the base station 1520, and it may be unknown or imperceptible to the base station 1520. Such procedures and functionalities may be known and practiced in the art. In certain embodiments, measurements may involve proprietary UE signaling facilitating the host computer's 1510 measurements of throughput, propagation times, latency and the like. The measurements may be implemented in that the software 1511, 1531 causes messages to be transmitted, in particular empty or "dummy" messages, using the OTT connection 1550 while it monitors propagation times, errors etc.

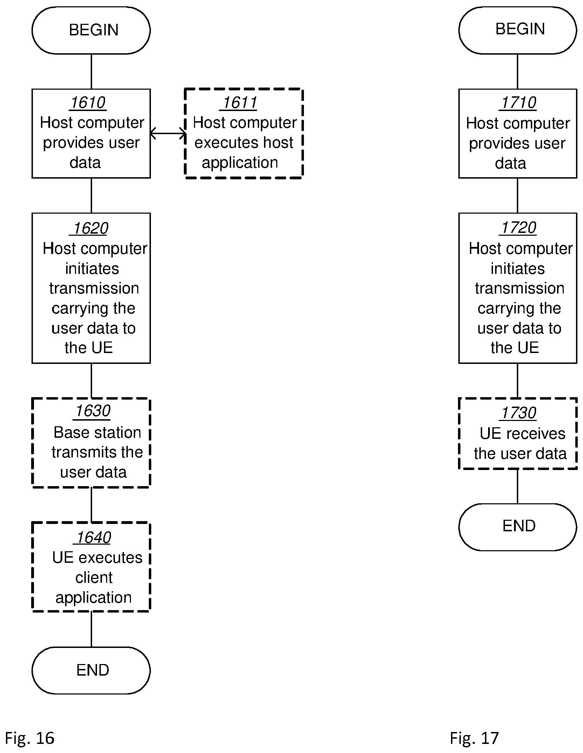

Fig. 16 is a flowchart illustrating a method implemented in a communication system, in accordance with one embodiment. The communication system includes a host computer, a base station and a UE which may be those described with reference to Fig. 14 and 15. For simplicity of the present disclosure, only drawing references to Fig. 16 will be included in this section. In a first step 1610 of the method, the host computer provides user data. In an optional substep 1611 of the first step 1610, the host computer provides the user data by executing a host application. In a second step 1620, the host computer initiates a transmission carrying the user data to the UE. In an optional third step 1630, the base station transmits to the UE the user data which was carried in the transmission that the host computer initiated, in accordance with the teachings of the embodiments described throughout this disclosure. In an optional fourth step 1640, the UE executes a client application associated with the host application executed by the host computer.

Fig. 17 is a flowchart illustrating a method implemented in a communication system, in accordance with one embodiment. The communication system includes a host computer, a base station and a UE which may be those described with reference to Figs. 14 and 15. For simplicity of the present disclosure, only drawing references to Fig. 16 will be included in this section. In a first step 1710 of the method, the host computer provides user data. In an optional substep (not shown) the host computer provides the user data by executing a host application. In a second step 1720, the host computer initiates a transmission carrying the user data to the UE. The transmission may pass via the base station, in accordance with the teachings of the embodiments described throughout this disclosure. In an optional third step 1730, the UE receives the user data carried in the transmission.

As has become apparent from above description, embodiments of the technique can handle actions of the UE (e.g., the relay UE) when an RLF is detected. In same or further embodiments, the actions have the main target to lower the connectivity interruption delay and reduce the signaling overhead. The technique may be applied and (at least some of) the advantages may be achieved in combination with a L3- or a L2-based relay solution is used.

Many advantages of the present invention will be fully understood from the foregoing description, and it will be apparent that various changes may be made in the form, construction and arrangement of the units and devices without departing from the scope of the invention and/or without sacrificing all of its advantages. Since the invention can be varied in many ways, it will be recognized that the invention should be limited only by the scope of the following claims.

## Claims

1. A method (200-RL) of handling a radio link failure, RLF, in a relayed radio communication relayed through a relay radio device (100-RL) between a remote radio device (100-RM) and a radio access network, RAN (100-NN), wherein the relay radio device (100-RL) performs the following steps:
• determining (202-RL) an RLF in the relayed radio communication in at least one of:
∘ a sidelink, SL, between the remote radio device (100-RM) and the relay radio device (100-RL); and
∘ a UL and/or DL between the RAN (100-NN) and the relay radio device (100-RL); **characterized by**
• initiating (204-RL), responsive to the determined RLF, at least one of a release, a reconfiguration, and a reestablishment of the relayed radio communication by transmitting, from the relay radio device (100-RL) to the remote radio device (100-RM) an indication of the RLF.

2. The method (200-RL) of claim 1, wherein the method (200-RL) is performed at and/or by at least one of:
an adaptation layer of a protocol stack of the relayed radio communication;
a packet data convergence protocol, PDCP, layer of a protocol stack of the relayed radio communication;
a radio resource control, RRC, layer of a protocol stack of the relayed radio communication; and
a medium access control layer, MAC, of a protocol stack of the relayed radio communication.

3. The method (200-RL) of any one of claims 1 to 2, wherein the SL between the remote radio device (100-RM) and the relay radio device (100-RL) uses a PC5 radio interface or a direct Wi-Fi radio interface.

4. The method (200-RL) of any one of claims 1 to 3, wherein the UL and/or the DL uses an Uu radio interface.

5. The method (200-RL) of any one of claims 1 to 4, wherein the reconfiguration, or the reestablishment is performed for at least one of:
the SL between the remote radio device (100-RM) and the relay radio device (100-RL); and
the UL and/or the DL between the relay radio device and the RAN (100-NN).

6. The method (200-RL) of any one of claims 1 to 5, wherein the RLF is determined (202-RL) for the SL between the relay radio device (100-RL) and the remote radio device (100-RM), and wherein the reconfiguration is performed or initiated (204-RL) for the SL between the relay radio device (100-RL) and the remote radio device (100-RM).

7. The method (200-RL) of any one of claims 1 to 5, wherein the RLF is determined (202-RL) for the link between the relay radio device (100-RL) and the RAN (100-NN), and wherein the reestablishment is performed or initiated (204-RL) for the link between the relay radio device (100-RL) and the RAN (100-NN).

8. The method (200-RL) of any one of claims 1 to 7, wherein the SL between the relay radio device (100-RL) and the remote radio device (100-RM) is maintained during the reestablishment.

9. A relay radio device, (100-RL) for handling a radio link failure, RLF, in a relayed radio communication relayed through a relay radio device (100-RL) between a remote radio device (100-RM) and a radio access network, RAN, the RAN (100-NN) being configured to perform the steps of any one of claims 1-8.

## Patentansprüche

1. Verfahren (200-RL) zur Handhabung eines Funkverbindungsfehlers, RLF, in einer weitergeleiteten Funkkommunikation, die über eine Weiterleitungsfunkvorrichtung (100-RL) zwischen einer Remote-Funkvorrichtung (100-RM) und einem Funkzugangsnetzwerk, RAN, (100-NN) weitergeleitet wird, wobei die Weiterleitungsfunkvorrichtung (100-RL) die folgenden Schritte ausführt:
• Bestimmen (202-RL) eines RLF in der weitergeleiteten Funkkommunikation in mindestens einem von Folgenden:
∘ einem Sidelink, SL, zwischen der Remote-Funkvorrichtung (100-RM) und der Weiterleitungsfunkvorrichtung (100-RL); und
∘ einem UL und/oder einem DL zwischen dem RAN (100-NN) und der Weiterleitungsfunkvorrichtung (100-RL); **gekennzeichnet durch**
• Initiieren (204-RL) mindestens eines von einer Freigabe, einer Rekonfiguration und einer Wiederherstellung der weitergeleiteten Funkkommunikation in Reaktion auf den bestimmten RLF durch Senden einer Anzeige des RLF von der Weiterleitungsfunkvorrichtung (100-RL) an die Remote-Funkvorrichtung (100-RM).

2. Verfahren (200-RL) nach Anspruch 1, wobei das Verfahren (200-RL) an und/oder von mindestens einem von Folgenden durchgeführt wird:
einer Anpassungsschicht eines Protokollstapels der weitergeleiteten Funkkommunikation,
einer Paketdatenkonvergenzprotokollschicht, PDCP-Schicht, eines Protokollstapels der weitergeleiteten Funkkommunikation,
einer Funkressourcensteuerungsschicht, RRC-Schicht, eines Protokollstapels der weitergeleiteten Funkkommunikation, und
einer Medienzugriffssteuerungsschicht, MAC-Schicht, eines Protokollstapels der weitergeleiteten Funkkommunikation.

3. Verfahren (200-RL) nach einem der Ansprüche 1 bis 2, wobei der SL zwischen der Remote-Funkvorrichtung (100-RM) und der Weiterleitungsfunkvorrichtung (100-RL) eine PC5-Funkschnittstelle oder eine direkte Wi-Fi-Funkschnittstelle verwendet.

4. Verfahren (200-RL) nach einem der Ansprüche 1 bis 3, wobei der UL und/oder der DL eine Uu-Funkschnittstelle verwenden.

5. Verfahren (200-RL) nach einem der Ansprüche 1 bis 4, wobei die Rekonfiguration oder die Wiederherstellung für mindestens einen von Folgenden durchgeführt wird:
den SL zwischen der Remote-Funkvorrichtung (100-RM) und der Weiterleitungsfunkvorrichtung (100-RL); und
den UL und/oder den DL zwischen der Weiterleitungsfunkvorrichtung und dem RAN (100-NN).

6. Verfahren (200-RL) nach einem der Ansprüche 1 bis 5, wobei der RLF für den SL zwischen der Weiterleitungsfunkvorrichtung (100-RL) und der Remote-Funkvorrichtung (100-RM) bestimmt wird (202-RL) und wobei die Rekonfiguration für den SL zwischen der Weiterleitungsfunkvorrichtung (100-RL) und der Remote-Funkvorrichtung (100-RM) durchgeführt oder initiiert wird (204-RL).

7. Verfahren (200-RL) nach einem der Ansprüche 1 bis 5, wobei der RLF für die Verbindung zwischen der Weiterleitungsfunkvorrichtung (100-RL) und dem RAN (100-NN) bestimmt wird (202-RL) und wobei die Wiederherstellung für die Verbindung zwischen der Weiterleitungsfunkvorrichtung (100-RL) und dem RAN (100-NN) durchgeführt oder initiiert wird (204-RL).

8. Verfahren (200-RL) nach einem der Ansprüche 1 bis 7, wobei der SL zwischen der Weiterleitungsfunkvorrichtung (100-RM) und der Remote-Funkvorrichtung (100-RL) während der Wiederherstellung aufrechterhalten wird.

9. Weiterleitungsfunkvorrichtung, (100-RL) zum Handhaben eines Funkverbindungsfehlers, RLF, in einer weitergeleiteten Funkkommunikation, die über eine Weiterleitungsfunkvorrichtung (100-RL) zwischen einer Remote-Funkvorrichtung (100-RM) und einem Funkzugangsnetzwerk weitergeleitet wird, wobei das RAN (100-NN) dazu konfiguriert ist, die Schritte nach einem der Ansprüche 1-8 auszuführen.

## Revendications

1. Procédé (200-RL) de gestion d'une défaillance de liaison radio, RLF, dans une communication radio relayée qui est relayée via un dispositif radio relais (100-RL) entre un dispositif radio distant (100-RM) et un réseau d'accès radio, RAN (100-NN), dans lequel le dispositif radio relais (100-RL) réalise les étapes suivantes :
• la détermination (202-RL) d'une RLF dans la communication radio relayée dans au moins l'une parmi :
∘ une liaison latérale, SL, entre le dispositif radio distant (100-RM) et le dispositif radio relais (100-RL) ; et
∘ une UL et/ou une DL entre le RAN (100-NN) et le dispositif radio relais (100-RL) ; **caractérisé par**
• l'initiation (204-RL), en réponse à la RLF déterminée, d'au moins l'un parmi une libération, une reconfiguration et un rétablissement de la communication radio relayée par la transmission, depuis le dispositif radio relais (100-RL) au dispositif radio distant (100-RM), d'une indication de la RLF.

2. Procédé (200-RL) selon la revendication 1, dans lequel le procédé (200-RL) est réalisé au niveau de et/ou par au moins l'une parmi :
une couche d'adaptation d'une pile de protocoles de la communication radio relayée ;
une couche de protocole de convergence de données en paquets, PDCP, d'une pile de protocoles de la communication radio relayée ;
une couche de commande de ressources radio, RRC, d'une pile de protocoles de la communication radio relayée ; et
une couche de commande d'accès au support, MAC, d'une pile de protocoles de la communication radio relayée.

3. Procédé (200-RL) selon l'une quelconque des revendications 1 et 2, dans lequel la SL entre le dispositif radio distant (100-RM) et le dispositif radio relais (100-RL) utilise une interface radio PC5 ou une interface radio Wi-Fi directe.

4. Procédé (200-RL) selon l'une quelconque des revendications 1 à 3, dans lequel l'UL et/ou la DL utilisent une interface radio Uu.

5. Procédé (200-RL) selon l'une quelconque des revendications 1 à 4, dans lequel la reconfiguration ou le rétablissement est réalisé pour au moins l'une parmi :
la SL entre le dispositif radio distant (100-RM) et le dispositif radio relais (100-RL) ; et
l'UL et/ou la DL entre le dispositif radio relais et le RAN (100-NN).

6. Procédé (200-RL) selon l'une quelconque des revendications 1 à 5, dans lequel la RLF est déterminée (202-RL) pour la SL entre le dispositif radio relais (100-RL) et le dispositif radio distant (100-RM), et dans lequel la reconfiguration est réalisée ou initiée (204-RL) pour la SL entre le dispositif radio relais (100-RL) et le dispositif radio distant (100-RM).

7. Procédé (200-RL) selon l'une quelconque des revendications 1 à 5, dans lequel la RLF est déterminée (202-RL) pour la liaison entre le dispositif radio relais (100-RL) et le RAN (100-NN), et dans lequel le rétablissement est réalisé ou initié (204-RL) pour la liaison entre le dispositif radio relais (100-RL) et le RAN (100-NN).

8. Procédé (200-RL) selon l'une quelconque des revendications 1 à 7, dans lequel la SL entre le dispositif radio relais (100-RL) et le dispositif radio distant (100-RM) est maintenue au cours du rétablissement.

9. Dispositif radio relais, (100-RL), pour gérer une défaillance de liaison radio, RLF, dans une communication radio relayée qui est relayée via un dispositif radio relais (100-RL) entre un dispositif radio distant (100-RM) et un réseau d'accès radio, le RAN (100-NN) étant configuré pour réaliser les étapes selon l'une quelconque des revendications 1 à 8.
